(19) Europäisches Patentamt
European Patent Office
Office européen des brevets

(11) EP 2 492 296 B1

(12) EUROPEAN PATENT SPECIFICATION

(45) Date of publication and mention of the grant of the patent:
**16.12.2015 Bulletin 2015/51**

(21) Application number: **12155933.0**

(22) Date of filing: **17.02.2012**

(51) Int Cl.:
***C08G 18/32** (2006.01)* ***C08G 18/44** (2006.01)*
***C08G 18/62** (2006.01)* ***C08G 18/65** (2006.01)*
***C08G 18/73** (2006.01)* ***C08G 18/75** (2006.01)*
***C08G 18/79** (2006.01)* ***C08G 18/80** (2006.01)*
***C09D 175/04** (2006.01)* ***B41C 1/05** (2006.01)*
***B41N 1/12** (2006.01)*

(54) **Resin composition for laser engraving, relief printing plate precursor and process for producing the same, and relief printing plate**

Harzzusammensetzung für Lasergravur, Reliefdruckplattenvorläufer und Herstellungsverfahren dafür sowie Reliefdruckplatte

Composition de résine pour gravure au laser, précurseur de plaque d’impression en relief, son procédé de production et plaque d’impression en relief

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2011 JP 2011036357**

(43) Date of publication of application:
**29.08.2012 Bulletin 2012/35**

(73) Proprietor: **Fujifilm Corporation**
**Minato-ku**
**Tokyo (JP)**

(72) Inventor: **Kanchiku, Shigefumi**
**Shizuoka (JP)**

(74) Representative: **Hoffmann Eitle**
**Patent- und Rechtsanwälte PartmbB**
**Arabellastraße 30**
**81925 München (DE)**

(56) References cited:
**WO-A1-2008/037635**
**US-A- 4 275 092**
**US-A1- 2010 247 867**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 492 296 B1

## Description

The present invention relates to a resin composition for laser engraving, a relief printing plate precursor for laser engraving and a process for producing the same, and a relief printing plate and a process for making the same.

A large number of so-called "direct engraving CTP methods", in which a relief-forming layer is directly engraved by means of a laser are proposed. In the method, a laser light is directly irradiated to a flexographic printing plate precursor to cause thermal decomposition and volatilization by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb the laser light and convert it into heat.

As the relief printing plate precursor for laser engraving, those described in JP-A-2010-100048 (JP-A denotes a Japanese unexamined patent application publication), JP-A-2009-262370, International Patent Application WO 2005-070691or US 2010/027867 are known.

It is an object of the present invention to provide a composition for laser engraving which can give a relief printing plate that has excellent stability over time of the composition during the production, an excellent relief shape obtainable by laser engraving, excellent rinsability of engraving residue generated by laser engraving, and excellent printing durability and ink transferability of the printing plate, a relief printing plate precursor using the composition for laser engraving, a method for making a relief printing plate using the relief printing plate precursor, and a relief printing plate obtained by the method.

The object of the present invention described above was achieved by the following means <1>, <17>, <20> and <23>. Preferred embodiments <2> to <16>, <18> to <19>, <21> and <22> will be listed together.

<1> A composition for laser engraving, comprising (Component A) a compound comprising two or more blocked isocyanate groups that are protected by a sequestering agent having a carboxylic acid ester bond and/or an amide bond selected from the group consisting of a urea-based sequestering agent, an active methylene-based sequestering agent, an amide-based sequestering agent, and an imide-based sequestering agent; and (Component B) a compound having two or more hydroxyl groups, the composition satisfying the relation of Formula (1) in terms of the number of blocked isocyanate groups in one molecule of Component A, $A_I$, and the number of hydroxyl groups in one molecule of Component B, $B_H$:

$$A_I + B_H > 4 \qquad (1)$$

<2> the composition for laser engraving according to <1> or <2>, wherein Component A is protected by a sequestering agent selected from the group consisting of an active methylene-based sequestering agent and an amide-based sequestering agent;

<3> The composition for laser engraving according to claims 1 or 2, wherein the sequestering agent is a diester of malonic acid.

<4> the composition for laser engraving according to any one of <1> to <3>, wherein Component A is protected by an active methylene-based sequestering agent;

<5> the composition for laser engraving according to any one of <1> to <4>, wherein Component B is (Component B1) a low molecular weight compound having a molecular weight of less than 5,000, and/or (Component B2) a polymeric compound having a molecular weight of 5,000 or more;

<6> the composition for laser engraving according to any one of <1> to <5>, wherein the composition further comprises (Component C) a binder polymer having a weight average molecular weight of at least 5,000 but less than 500,000;

<7> the composition for laser engraving according to any one of <1> to <6>, wherein Component C is at least one resin selected from the group consisting of a carbonate resin, a urethane resin, an acrylic resin, an ester resin, and a vinyl resin;

<8> the composition for laser engraving according to any one of <1> to <7>, wherein Component C is a binder polymer having a functional group that is capable of reacting with an isocyanate group and forming a crosslinked structure;

<9> the composition for laser engraving according to any one of <1> to <8>, wherein the composition further comprises (Component D) silica particles;

<10> the composition for laser engraving according to <9>, wherein the number average particle size of Component D is at least 0.01 μm but no greater than 10 μm;
<11> the composition for laser engraving according to any one of <1> to <10>, further comprising (Component E) a compound accelerating a deprotection reaction of a protected isocyanate group, and/or a subsequent urethanization reaction;
<12> the composition for laser engraving according to any one of <1> to <11>, wherein the composition further comprises (Component F) a compound having at least one of a hydrolyzable silyl group and a silanol group, and having a weight average molecular weight of less than 5,000;
<13> the composition for laser engraving according to any one of <1> to <12>, wherein the composition further comprises (Component G) an ethylenically unsaturated compound having a weight average molecular weight of less than 5,000;
<14> the composition for laser engraving according to any one of <1 > to <13>, wherein the composition further comprises (Component H) a radical polymerization initiator;
<15> the composition for laser engraving according to any one of <1> to <14>, wherein the composition further comprises (Component I) a photothermal conversion agent capable of absorbing light having a wavelength of 700 nm to 1,300 nm;
<16> the composition for laser engraving according to any one of <1> to <15>, wherein the composition further comprises (Component J) an alcohol exchange reaction catalyst;
<17> a relief printing plate precursor comprising a relief-forming layer formed by the composition for laser engraving according to any one of <1> to <16> provided on a support;
<18> the relief printing plate precursor according to <17>, wherein the relief-forming layer is crosslinked by light and/or heat;
<19> the relief printing plate precursor according to <17>, wherein the relief-forming layer is crosslinked by heat;
<20> a method for making a relief printing plate, comprising (1) a crosslinking step of crosslinking the relief-forming layer according to any one of <17> to <19> by heat and/or light; and (2) an engraving step of laser-engraving the crosslinked relief-forming layer to form a relief layer;
<21> the method for making a relief printing plate according to <20>, wherein (1) the crosslinking step is a step of crosslinking the relief-forming layer by heat;
<22> the method for making a relief printing plate according to <20> or <21>, wherein the method comprises a step of laser-engraving of the crosslinked relief-forming layer to form a relief layer;
<23> a relief printing plate produced by the method according to any one of <20> to <22>; and
<24> the relief printing plate according to <23>, wherein the thickness of the relief layer is at least 0.05 mm but no greater than 10 mm.

According to the present invention, a composition for laser engraving which is excellent in the stability of the coating liquid, the relief cross-sectional shape, rinsability, printing durability and ink transferability can be provided. Furthermore, a relief printing plate precursor using this composition for laser engraving as a relief-forming layer, a method for making a relief printing plate based on this relief printing plate precursor, and a relief printing plate can be provided.
The present invention is explained in detail below.

(Composition for laser engraving)

Hereinafter, the composition for laser engraving of the present invention will be described in detail.
The composition for laser engraving of the present invention is characterized by comprising (Component A) a compound having two or more blocked isocyanate groups that are protected by a sequestering agent having a carboxylic acid ester bond and/or an amide bond , selected from the group consisting of a urea-based sequestering agent, an active methylene-based sequestering agent such as a diester of malonic acid, an amide-based sequestering agent, and an imide-based sequestering agent; and (Component B) a compound having two or more hydroxyl groups, and by satisfying the relation of Formula (1) in terms of the number of blocked isocyanate groups in one molecule of Component A, $A_I$, and the number of hydroxyl groups in one molecule of Component B, $B_H$.

$$A_I+B_H>4 \qquad (1)$$

<Component A>

Component A is a compound having two or more blocked isocyanate groups protected by a sequestering agent, and may also be referred to as "blocked isocyanate compound" in the following description.

Isocyanate compounds are well known, and are produced in an industrial scale by a reaction between an amine and phosgene. A compound having two or more isocyanate groups, that is, a polyisocyanate compound, is widely used in the production of polyurethane or polyurea based on polyaddition of polyol or polyamine. Protected polyisocyanate compounds in which the isocyanate group of the polyisocyanate compound is protected by a sequestering agent, are also known.

The inventors of the present invention found that when a blocked isocyanate group protected by a sequestering agent having a carboxylic acid ester bond and/or an amide bond as Component A is used, the problem to be addressed by the present invention can be solved. The inventors found that when a blocked isocyanate compound protected by a sequestering agent which is selected from the group consisting of a urea-based sequestering agent, an active methylene-based sequestering agent, an amide-based sequestering agent, and an imide-based sequestering agent, and comprises a carboxylic acid ester bond and/or an amide bond, is used, the problem can be effectively achieved.

Component A is preferably a blocked isocyanate compound protected by a sequestering agent which is selected from the group consisting of an active methylene-based sequestering agent and an amide-based sequestering agent and comprises a carboxylic acid ester bond and/or an amide bond, and more preferably a blocked isocyanate compound protected by a sequestering agent which is an active methylene-based compound and comprises a carboxylic acid ester bond.

Component A may be such that plural isocyanate groups are protected by different sequestering agents described above.

The extent of protection of the isocyanate groups of Component A by the specific sequestering agents described above is preferably 50 mol% or more, more preferably 80 mol% or more, and particularly preferably 99.9 mol% or more, of all the isocyanate groups.

In regard to the temperature at which Component A and Component B can undergo an addition reaction and can be cured, a relatively lower temperature is preferable from the viewpoint of crosslinking efficiency. Specifically, the oven temperature at the time of curing is preferably 150°C or lower, more preferably 120°C or lower, and most preferably 100°C or lower. The oven temperature at the time of curing is preferably 50°C or higher, more preferably 60°C or higher, and most preferably 65°C or higher.

Meanwhile, the term "can be cured" means that when (Component A) the blocked isocyanate compound and (Component B) glycerol used in the composition are mixed in the amounts making the ratio: mole number of blocked NCO/mole number of OH = 1, and $Sn(n\text{-}Bu)_4$ (1 wt%), which is (Component E) that will be described later, is incorporated, and the mixture is heated for 2 hours at various temperatures, the residual ratio of the blocked isocyanate is 15% or less. The detection of the residual ratio is carried out by extracting the film after heating with THF or acetone, and performing HPLC or GC.

The sequestering agent is not particularly limited as long as the agent has an ester or amide bond, and is selected from a urea-based sequestering agent, an active methylene-based sequestering agent, an amide-based sequestering agent, or an imide-based sequestering agent, but is preferably an active methylene-based sequestering agent, an amide-based sequestering agent, or an imide-based sequestering agent, and most preferably an active methylene-based sequestering agent.

In regard to the isocyanate group in the raw material for producing Component A, from the viewpoint of high reactivity, it is preferable that the isocyanate group be a primary isocyanate group rather than a secondary isocyanate group. Furthermore, from the viewpoint of the flexibility of the film after crosslinking, a residue having an isocyanate group is preferably a linear or branched alkyl chain having 6 to 30 carbon atoms, an alicyclic ring or an aromatic ring; more preferably a linear or branched alkyl chain having 6 to 25 carbon atoms, or an alicyclic ring; and most preferably a linear or branched alkyl chain having 6 to 20 carbon atoms.

According to the present invention, the term "6 to 30" means at least 6 but no greater than 30, and the same applies to the following descriptions.

In the production of (Component A) the blocked isocyanate compound used in the present invention, the sequestering agent is preferably used in an amount of 1 equivalent or more relative to the isocyanate group. If the amount is less than 1 equivalent, there is a risk that the isocyanate group may remain, and storage stability may be impaired.

Here, the blocked isocyanate compound protected by an active methylene-based sequestering agent is produced by a known method.

For instance, a raw material solution of an unprotected polyisocyanate dissolved in an inert solvent such as butyl acetate or xylene, is slowly added to a solution of an ester type active methylene-based sequestering agent in an amount which is equimolar or more to the number of protected isocyanate groups of the raw material. Zinc 2-ethylhexanoate is added thereto as a catalyst, and then stirring is continued. Finally, the mixture is overheated, and thus the reaction is completed.

In regard to the method for producing a blocked isocyanate compound, reference can be made to the descriptions in JP-W-2004-533526 (the term "JP-W" as used herein means an unexamined published international patent application).

The reaction for protection or deprotection of isocyanate can be quantitatively determined by an infrared absorption spectrum of an unprotected raw material isocyanate (loss of isocyanate band at 2273 $cm^{-1}$).

A preferred example of an active methylene-based sequestering agent having a carboxylic acid ester bond is a diester of malonic acid, and in this case, the alcohol that forms a diester is preferably a linear alkyl alcohol having 2 to 6 carbon atoms, or benzyl alcohol.

Furthermore, examples of a sequestering agent having an amide bond include *N*,*N*-dialkyl-substituted ureas, and in this case, the substituent alkyl group is preferably an alkyl group having 2 to 6 carbon atoms, and more preferably a linear alkyl group.

Furthermore, a sequestering agent having a cyclic imide bond is preferably succinimide or maleimide, and more preferably maleimide.

<Component B>

Component B is a compound having two or more hydroxyl groups, that is, a polyol compound. As Component B, (Component B1) a low molecular weight polyol compound having a molecular weight of less than 5,000, and/or (Component B2) a polymeric polyol compound having a molecular weight of 5,000 or more are used. It is preferable to use Component B1 only, or to use Component B1 and Component B2 in combination.

Component B1 and Component B2 will be explained below.

Component B1 is a low molecular weight polyol compound having a molecular weight of less than 5,000. Examples of Component B1 include typical low molecular weight compounds (for example, glycerin) which do not have a molecular weight distribution and have a molecular weight of 500 or less, as well as oligomeric compounds having a molecular weight of greater than 500 and less than 5,000. Examples of the latter include polyalkylene glycol. When there is a molecular weight distribution, the molecular weight range is discriminated based on the weight average molecular weight.

Component B2 is a polymeric polyol compound having a molecular weight of 5,000 or more. Examples of Component B2 include compounds having a very narrow molecular weight distribution to compounds having a relatively broad molecular weight distribution. A preferable molecular weight range of Component B2 is at least 5,000 but no greater than 500,000 as the weight average molecular weight.

Examples of Component B2 include condensation polymers, polyaddition polymers and addition polymerized polymers, and addition polymerized polymers are preferred, while polyvinyl acetal is particularly preferred.

<Component B1>

From the viewpoint of the flexibility of the film after crosslinking, Component B1 is preferably an alcohol having a linear or branched alkyl chain or an alicyclic ring; more preferably an alcohol having a linear or branched alkyl chain having a molecular weight of 500 or greater; and most preferably an alcohol having a linear or branched alkyl chain having a molecular weight of 1,000 or greater. Furthermore, these alcohols may contain a linking group such as an ester, an ether, an amide, a urea, a urethane or a carbonate in the alkyl chain.

Examples of the low molecular weight polyol compound of Component B1 include trimethylolpropane, trimethylolethane, glycerin, 1,2,6-hexanetriol, ethylene glycol, 1, 2-propylene glycol, 1, 3-propylene glycol, 2-methylpropane-1, 3-diol, neopentyl glycol, 2-butyl-2-ethyl-1, 3-propanediol, cyclohexane-1, 4-dimethylol, hydrogenated bisphenol A, 1, 5-pentanediol, 3-methylpentanediol, 1, 6-hexanediol, 2, 2, 4-dimethylpentane-1, 3-diol, dimethylolpropionic acid, pentaerythritol, ditrimethylolpropane, dipentaerythritol, and mixtures thereof. Component B1 is preferably glycerin, diethylene glycol, polypropylene glycol or polyethylene glycol.

A thiol compound such as mercaptoethanol may also be used instead of the low molecular weight polyol compound or in combination thereof.

The incorporation amount of Component B1 is not particularly limited, but from the viewpoint of satisfying water resistance and film strength in a well-balanced manner, the incorporation amount is preferably 1 to 50 wt%, more preferably 2 to 30 wt%, and particularly preferably 5 to 20 wt%, relative to the total solids content.

(Component B2)

As a polymer polyol having a molecular weight of 5,000 of more, the use of a polymer having a hydroxyl group (-OH) (hereinafter, also referred to as the "specific polymer") is particularly preferable. As the skeleton of the specific polymer, although not particularly limited, an acrylic resin, and a polyvinylacetal resin are preferable.

Examples of the acrylic monomers used for synthesizing an acrylic resin having a hydroxyl group include preferably (meth)acrylic acid esters, crotonic acid esters and (meth)acrylamides having a hydroxyl group in the molecule. Specific examples of such monomers include 2-hydroxyethyl (meth)acrylate, 2-hydroxypropyl (meth)acrylate, 4-hydroxybutyl (meth)acrylate etc. Copolymers obtained by copolymerizing these with a known (meth)acrylic-based monomer or

vinyl-based monomer are used preferably.

As the specific polymer, the use of an epoxy resin having a hydroxyl group on the side chain may also be possible. As a preferable specific example, an epoxy resin obtained by polymerizing an adduct of bisphenol A and epichlorohydrin as raw material monomers is cited.

The specific polymer is such that the hydroxyl group contained in this polymer and Component A react and form a crosslinked structure. The specific polymer is also a polymer which can react with Component F that will be described later, and is more preferably a polymer which is water-insoluble and is soluble in an alcohol having 1 to 4 carbon atoms.

Examples of preferable specific polymers in the present invention include polyvinyl butyral (PVB), acrylic resin having a hydroxyl group on the side chain, epoxy resin having a hydroxyl group on the side chain etc., from the viewpoint of having high engraving sensitivity and good film performance while satisfying both the aptitude for an aqueous ink and the aptitude for a UV ink.

The specific polymer usable for the present invention gives particularly preferably a glass transition temperature (Tg) of at least 20°C, when combined with a photothermal conversion agent capable of absorbing light having a wavelength of 700 to 1,300 nm to be described later, which is a preferable combining component of the resin composition for laser engraving constituting the recording layer in the present invention, because the engraving sensitivity is improved.

Examples of the binder that can be preferably used in the present invention are shown below.

(1) Polyvinyl acetal and derivatives thereof

Polyvinyl acetal is a compound obtained by converting polyvinyl alcohol (obtained by saponifying polyvinyl acetate) into a cyclic acetal. A polyvinyl acetal derivative is a polymer that polyvinyl acetal is modified, or a polyvinyl acetal having another copolymerization component.

The acetal content in the polyvinyl acetal (mole% of vinyl alcohol units converted into acetal with the total number of moles of vinyl acetate monomer starting material as 100 %) is preferably 30 to 90 %, more preferably 50 to 85 %, and particularly preferably 55 to 78 %.

The vinyl alcohol unit in the polyvinyl acetal is preferably 10 to 70 mole% relative to the total number of moles of the vinyl acetate monomer starting material, more preferably 15 to 50 mole%, and particularly preferably 22 to 45 mole%.

Furthermore, the polyvinyl acetal may have a vinyl acetate unit as another component, and the content thereof is preferably 0.01 to 20 mole%, and more preferably 0.1 to 10 mole%. The polyvinyl acetal derivative may further have another copolymerization unit.

Examples of the polyvinyl acetal include polyvinyl butyral, polyvinyl propylal, polyvinyl ethylal, and polyvinyl methylal. Among them, polyvinyl butyral (PVB) is preferable.

Polyvinyl butyral is a polymer obtained by a reaction polyvinyl alcohol and butyl aldehyde. A polyvinyl butyral derivative may be used.

Examples of the polyvinyl butyral derivatives include an acid-modified PVB in which at least some of the hydroxy groups of the hydroxyethylene units are modified with an acid group such as a carboxy group, a modified PVB in which some of the hydroxy groups are modified with a (meth)acryloyl group, a modified PVB in which at least some of the hydroxy groups are modified with an amino group, and a modified PVB in which at least some of the hydroxy groups have introduced thereinto ethylene glycol, propylene glycol, or a multimer thereof.

From the viewpoint of a balance being achieved between engraving sensitivity and film formation properties, the molecular weight of the polyvinyl acetal is preferably 5,000 to 800,000 as the weight average molecular weight, more preferably 8,000 to 500,000 and, from the viewpoint of improvement of rinsing properties for engraving residue, particularly preferably 50,000 to 300,000.

Particularly preferable examples of the polyvinyl acetal are explained below by polyvinyl butyral (PVB) and the derivatives therof, but the polyvinyl acetal should not be construed as being limited to the Examples.

Polyvinyl butyral derivatives are commercially available and preferable examples from viewpoint of solubility in alcohol, particularly in ethanol, are the 'E-LEC B' series and the 'E-LEC K (KS)' series manufactured by Sekisui Chemical co., Ltd., the Denka Butyral series manufactured by Denki Kagaku Kogyo Kabushiki Kaisha. From the viewpoint of alcohol solubility (particularly in ethanol), the polyvinyl butyral is preferably the 'S-LEC B' series and the 'S-LEC K(KS)' series manufactured by Sekisui Chemical Co., Ltd. From the viewpoint of alcohol solubility (particularly in ethanol), the 'S-LEC B' series manufactured by Sekisui Chemical Co., Ltd. and 'Denka Butyral' manufactured by Denki Kagaku Kogyo Kabushiki Kaisha are more preferable; among the 'S-LEC B' series, 'BL-1', 'BL-1H', 'BL-2', 'BL-5', 'BL-S', 'BX-L', 'BM-S', and 'BH-S' are particularly preferable, and among the 'Denka Butyral' manufactured by Denki Kagaku Kogyo Kabushiki Kaisha '#3000-1', '#3000-2', '#3000-4', '#4000-2', '#6000-C', '#6000-EP', '#6000-CS', and '#6000-AS' are particularly preferable.

When manufacturing a relief-forming layer from PVB as the specific polymer and Component A, casting and drying of a solution in a solvent is preferable from viewpoint of flatness of the film surface.

In addition to the polyvinylacetal and derivatives thereof, as the specific polymer, it is also possible to use an acrylic resin that is obtained by using a known acrylic monomer and has a hydroxyl group in a molecule. Furthermore, as the specific polymer, a novolac resin that is a resin obtained by condensing phenols and aldehydes under an acidic condition may also be used. Moreover, as the specific polymer, an epoxy resin having a hydroxyl group on a side chain may also be used.

Among the specific polymers, polyvinyl butyral and derivatives thereof are particularly preferable from the viewpoint of rinsing properties and printing durability when made into a recording layer.

The content of a hydroxyl group contained in the specific polymer in the present invention is preferably 0.1 to 15 mmol/g, and more preferably 0.5 to 7 mmol/g, in the polymer of any embodiment described above.

With regard to Component B2, only one type may be used or two or more types may be used in combination.

The weight average molecular weight of the binder that can be used in the present invention (on a polystyrene basis by GPC measurement) is preferably 5,000 to 1,000,000, more preferably 8,000 to 750,000, and most preferably 10,000 to 500,000.

A combined use of Component B1 and Component B2 is also a preferred embodiment. When they are used in combination, it is more preferable to use a polyol having two or three hydroxyl groups as Component B1 and polyvinyl acetal described above as Component B2 in combination, and it is particularly preferable to use glycerin as Component B1 and polyvinyl butyral as Component B2 in combination.

In the embodiment of using Component B1 and Component B2 described above in combination, it is preferable to use, as Component A, a blocked diisocyanate compound in which an alkylene diisocyanate having 4 to 8 carbon atoms is blocked with an active methylene compound.

According to the present invention, in general, a combination of preferred embodiments is a more preferred embodiment, and a combination of more preferred embodiments is an even more preferred embodiment.

From the viewpoints of satisfying the shape retention, water resistance and engraving sensitivity of the coated film in a balanced manner, the content of Component B2 in the resin composition of the present invention is, in the total solids content, preferably 5 to 80 wt%, more preferably 10 to 70 wt%, and particularly preferably 15 to 60 wt%.

When Components B1 and B2 are used together, the total content of these components is, in the total solids content, preferably preferably 5 to 90 wt%, more preferably 15 to 80 wt%, and particularly preferably 20 to 60 wt% also from the viewpoints of satisfying the shape retention, water resistance and engraving sensitivity of the coated film in a balanced manner.

<formula (1)>

The composition of the present invention is characterized by satisfying the relation of Formula (1) in terms of the number of blocked isocyanate groups in one molecule of Component A, $A_I$, and the number of hydroxyl groups in one molecule of Component B, $B_H$:

$$A_I + B_H > 4 \qquad (1)$$

When the sum of $A_I$ and $B_H$ is 4 or less, three-dimensional crosslinking does not sufficiently occur, and a film of a relief-forming layer having sufficient strength cannot be obtained.

The value of $A_I + B_H$ is preferably 4.1 or greater, more preferably 4.5 or greater, and particularly preferably 5 or greater.

The value of $A_I + B_H$ is preferably 1,000 or less, and more preferably 100 or less, and in the case where B is a low molecular weight polyol, the value is particularly preferably 6 or less.

As the blocked isocyanate compound, a compound having 2 to 6 protected isocyanate groups, in which a bifunctional to hexafunctional polyisocyanate is completely protected by a sequestering agent which is selected from the group consisting of a urea-based sequestering agent, an active methylene-based sequestering agent, an amide-based sequestering agent and an imide-based sequestering agent, and comprises a carboxylic acid ester bond and/or an amide bond, is preferably used. Therefore, it is preferable that following Formula (1A) in terms of $A_I$ be established.

$$2 \leq A_I \leq 6 \qquad (1A)$$

When a lower molecular weight polyol compound of Component B1 is used as the polyol of Component B, it is preferable to use a compound having 2 to 6 hydroxyl groups, and in this case, it is preferable that Formula (1 B) be satisfied.

$$2 \leq B_H \leq 6 \qquad (1B)$$

In the case of using a polymeric polyol compound of Component B2 as the polyol of Component B, the number of hydroxyl groups contained in one molecule can be determined from the molecular weight of the polymer and the value of hydroxyl groups, and the value of $B_H$ is preferably a number in the magnitude of several tens to several thousands.

When plural Component As having different $A_I$s are used as a mixture, the value of AI of the present invention is defined as the sum of combining the values of individual Component As and their molar fractions used. For example, when Component As having $A_I$ values of 2 and 3 are used in equimolar amounts, the apparent value of $A_I$ is 2.5.

In the case of using plural Component Bs in combination, the same applies to $B_H$ as well.

The composition of the present invention preferably comprises a compound having a number of functional groups of Component A, $A_I$, or a number of functional groups of Component B, $B_H$, of 3 or greater, in an amount of 10 mol% or more of the total mole number of Component A or the total mole number of Component B, in addition to a diisocyanate and a diol.

<Component C>

Component C is an optional component of the composition for laser engraving of the present invention, and is a binder polymer having a weight average molecular weight of at least 5,000 but less than 500,000. According to the present invention, this component is also simply referred to as "binder polymer" for simplicity.

It is preferable that the binder polymer of Component C be incorporated into the composition of the present invention, particularly in the case where Component B2 is not incorporated, for the purpose of enhancing the film strength and printing durability of the composition for laser engraving of the present invention.

In addition, Component C is a component other than Component B, particularly Component B2. Therefore, a low molecular weight compound having two or more hydroxyl groups is dealt with as Component B1, and a polymeric compound which is an addition polymer having a constituent unit having a hydroxyl group, or a derivative thereof, is dealt with as Component B2, as described above. Component B2 includes polyvinyl acetal such as polyvinyl butyral, which is a derivative of polyvinyl alcohol.

Component C is preferably at least one kind of resin selected from the group consisting of a carbonate resin, a urethane resin, an acrylic resin, an ester resin and a vinyl resin; more preferably a urethane resin or a carbonate resin; and particularly preferably a urethane resin. Urethane resins have excellent thermal degradability under laser exposure, and give excellent laser engraving sensitivity.

Furthermore, it is more preferable that Component C be a binder polymer having a functional group capable of reacting with an isocyanate group and forming a crosslinked structure (amino group or the like).

Component C is preferably used in an amount in the range of 2 to 80 wt% relative to the total solids content of the composition, and it is more preferable to use Component C in an amount in the range of 5 to 60 wt%, and most preferable to use in an amount in the range of 10 to 50 wt%.

<Component D>

Component D is an optional component of the composition for laser engraving of the present invention, and is silica particles. According to the present invention, the particle size of these silica particles is not particularly limited, but it is preferable that the number average particle size of Component D is at least 0.01 μm but no greater than 10 μm.

The number average particle size of Component D according to the present invention can be determined by using a known method, for example, transmission electron microscopy (TEM). The number average particle size is measured using a TEM image analysis.

As the silica particles used as Component D, known silica particles can be used, and any product produced by any method known to those having ordinary skill in the art may also be used. Silica particles are produced by a high temperature process, for example, a sol-gel process, a hot water process, a plasma process, or a method for producing a fumed metal oxide or a precipitated metal oxide.

When Component D is incorporated, the fluidity of the composition for laser engraving can be improved, and the performance such as engraving residue dispersibility at the time of laser engraving can be ameliorated.

According to the present invention, the concentration of silica particles is preferably 0.1 to 25 wt%, more preferably 0.1 to 15 wt%, and even more preferably 0.5 to 10 wt%, relative to the total weight of the composition for laser engraving. When the concentration of silica particles is at least 0.1 wt% but no greater than 25 wt%, satisfactory laser engraving properties can be obtained by suppressing the engraving residue scattering properties, and the image quality is not impaired.

<Component E>

Component E is an optional component of the composition for laser engraving of the present invention, and is a compound which accelerates the deprotection reaction of a protected isocyanate group and/or a subsequent urethanization reaction. According to the present invention, the component is also simply referred to as a "reaction accelerator".

Known compounds can be used as the reaction accelerator, and preferred examples include dibutyltin dilaurate, zinc 2-ethylhexanoate, zirconium tetraacetylacetonate, zirconium dibutoxybis(ethyl acetoacetate), titanium diisopropoxybis(ethyl acetoacetate), tin octanoate, monomethyltin mercaptoacetate, monobutyltin triacetate, monobutyltin monooctylate, monobutyltin monoacetate, monobutyltin maleate, monobutyltin maleic acid benzyl ester salt, monooctyltin maleate, monooctyltin thiodipropionate, monooctyltin tris(isooctylthioglycolic acid ester), monophenyltin triacetate, dimethyltin maleic acid ester salt, dimethyltin bis(ethylene glycol thioglycolate), dimethyltin bis(mercaptoacetic acid) salt, dimethyltin bis(3-mercaptopropionic acid)salt, dimethyltin bis(isooctyl mercaptoacetate), dibutyltin diacetate, dibutyltin dioctate, dibutyltin distearate, dibutyltin dilaurate, dibutyltin maleate, dibutyltin maleate polymer, dibutyltin maleic acid ester salt, dibutyltin bis(mercaptoacetic acid), dibutyltin bis(mercaptoacetic acid alkyl ester) salt, dibutyltin bis(3-mercaptopropionic acid alkoxybutyl ester) salt, dibutyltin bisoctyl thioglycol ester salt, dibutyltin (3-mercaptopropionic acid) salt, dioctyltin maleate, dioctyltin maleic acid ester salt, dioctyltin maleate polymer, dioctyltin dilaurate, dioctyltin bis(isooctyl mercaptoacetate), dioctyltin bis(isooctyl thioglycolic acid ester), dioctyltin bis(3-mercaptopropionic acid) salt, and tetrabutyltin.

When a reaction accelerator is incorporated into the composition for laser engraving of the present invention, a polyaddition reaction of Component A and Component B can be carried out at a lower temperature and in a shorter time.

When the reaction accelerator is incorporated, the composition for laser engraving can easily react such that the isocyanate is deprotected under the action of heat, or the blocked isocyanate group is crosslinked.

On the contrary, a composition which does not have a reaction accelerator gives a formulation which is stable at low temperature. Therefore, a reaction accelerator can be added to a composition comprising Component A and Component B at any appropriately selected time such as before, during or after the heating step.

The composition for laser engraving of the present invention is preferably thermally stable at room temperature (25°C), more preferably thermally stable at 40°C, and most preferably thermally stable at 70°C. Furthermore, it is preferable that curing be accelerated by heating at 150°C or higher, it is more preferable that curing be accelerated by heating at 120°C or higher, and it is most preferable that curing be accelerated by heating at 100°C or higher.

Component E is preferably used in an amount in the range of 0.01 to 3 wt%, and more preferably in an amount in the range of 0.05 to 0.5 wt%, relative to Component A.

<Component F>

Component F is an optional component of the composition for laser engraving of the present invention, and is a compound which comprises at least one of a hydrolyzable silyl group and a silanol group and has a weight average molecular weight of less than 5,000.

The 'hydrolyzable silyl group' of Component F used in the resin composition for laser engraving of the present invention is a silyl group that is hydrolyzable; examples of hydrolyzable groups include an alkoxy group, a mercapto group, a halogen atom, an amide group, an acetoxy group, an amino group, and an isopropenoxy group. A silyl group is hydrolyzed to become a silanol group, and a silanol group undergoes dehydration-condensation to form a siloxane bond. Such a hydrolyzable silyl group or silanol group is preferably one represented by Formula (1) below.

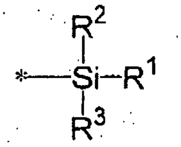

(1)

In Formula (1) above, $R^1$ to $R^3$ denote independently a hydrolyzable group selected from the group consisting of an alkoxy group, an aryloxy group, a mercapto group, a halogen atom, an amide group, an acetoxy group, an amino group, and an isopropenoxy group, or a hydroxy group, a hydrogen atom, and * represents a bonding position. At least one of $R^1$ to $R^3$ denotes a hydrolyzable group selected from the group consisting of an alkoxy group, an aryloxy group, a mercapto group, a halogen atom, an amide group, an acetoxy group, an amino group, and an isopropenoxy group, or a hydroxy group.

When $R^1$ to $R^3$ denote a monovalent organic group, from the viewpoint that solubility in various types of organic solvents can be given, an organic group is preferably an alkyl group having 1 to 30 carbon atoms.

In Formula (1) above, the hydrolyzable group bonded to the silicon atom is particularly preferably an alkoxy

group or a halogen atom.

From the viewpoint of rinsing properties and printing durability, the alkoxy group is preferably an alkoxy group having 1 to 30 carbon atoms, more preferably an alkoxy group having 1 to 15 carbon atoms, yet more preferably an alkoxy group having 1 to 5 carbon atoms, particularly preferably an alkoxy group having 1 to 3 carbon atoms.

Furthermore, examples of the halogen atom include a F atom, a Cl atom, a Br atom, and a I atom, and from the viewpoint of ease of synthesis and stability it is preferably a Cl atom or a Br atom, and more preferably a Cl atom.

All of $R^1$ to $R^3$ preferably denote a methoxy group or an ethoxy group.

'(Component F) a compound having at least one of a hydrolyzable silyl group and a silanol group' in the present invention is preferably a compound having one or more groups represented by Formula (1) above, and more preferably a compound having two or more. A compound having two or more hydrolyzable silyl groups is particularly preferably used. That is, a compound having in the molecule two or more silicon atoms having a hydrolyzable group bonded thereto is preferably used. The number of silicon atoms having a hydrolyzable group bond thereto contained in the compound is preferably at least 2 but no greater than 6, and most preferably 2 or 3.

A range of 1 to 3 of the hydrolyzable groups may bond to one silicon atom, and the total number of hydrolyzable groups in Formula (1) is preferably in a range of 2 or 3. It is particularly preferable that three hydrolyzable groups are bonded to a silicon atom. When two or more hydrolyzable groups are bonded to a silicon atom, they may be identical to or different from each other.

Examples of the alkoxy group include a methoxy group, an ethoxy group, a propoxy group, an isopropoxy group, a butoxy group, a tert-butoxy group, and a benzyloxy group. Examples of the alkoxysilyl group having an alkoxy group bonded thereto include a trialkoxysilyl group such as a trimethoxysilyl group, a triethoxysilyl group, a triisopropoxysilyl group, or a triphenoxysilyl group; a dialkoxymonoalkylsilyl group such as a dimethoxymethylsilyl group or a diethoxymethylsilyl group; and a monoalkoxydialkylsilyl group such as a methoxydimethylsilyl group or an ethoxydimethylsilyl group. A plurality of each of these alkoxy groups may be used in combination, or a plurality of different alkoxy groups may be used in combination.

Examples of the aryloxy group include phenoxy group. Examples of the aryloxysilyl group having an aryloxy group bonded thereto include a triarylsilyl group such as a triphenylsilyl group.

As specific preferred examples of Component F in the present invention, there can be cited a compound in which a plurality of groups represented by Formula (1) above are bonded via a divalent linking group, and from the viewpoint of the effect, such a divalent linking group is preferably a linking group having a sulfide group, an imino group or a ureylene group.

(F-1) a silane coupling agent, which is a preferable embodiment of Component C in the present invention, has indispensably at least one functional group of an alkoxy group and a halogen atom directly bonded to a Si atom as the functional group, and, from the viewpoint of easy handling of the compound, one having an alkoxy group is preferable.

Here, from the viewpoint of rinsing properties and printing durability, the alkoxy group has preferably 1 to 30 carbon atoms, more preferably 1 to 15 carbon atoms, and particularly preferably 1 to 5 carbon atoms.

The halogen atom includes a F atom, a Cl atom, a Br atom and an I atom, and, from the viewpoint of the easiness of synthesis and stability, a Cl atom and a Br atom are preferable, and a Cl atom is more preferable.

From the viewpoint of maintaining the good balance of the crosslinking level and softness of the film, the silane coupling agent in the present invention comprises the silane coupling group preferably at least 1 but no greater than 10 in the molecule, more preferably at least 1 but no greater than 5, and particularly preferably at least 2 but no greater than 4.

When two or more silane coupling groups are contained, preferably the silane coupling groups are linked each other by a linking group. As the linking group, di- or more valent organic groups that may have such substituent as a hetero atom or a hydrocarbon are cited, and, from the viewpoint of a high engraving sensitivity, an embodiment having a hetero atom (N, S, O) is preferable, and a linking group having a S atom is particularly preferable.

From such viewpoint, as the silane coupling agent in the present invention, a compound, which has two silane coupling groups having a methoxy group or an ethoxy group, particularly a methoxy group bonded to a Si atom as an alkoxy group in the molecule and these silane coupling groups are bonded via an alkylene group having a hetero atom (particularly preferably a S atom), is preferable. More specifically, one having a linking group having a sulfide group is preferable.

Examples of another preferable embodiment of the linking group linking silane coupling groups each other include a linking group having an oxyalkylene group. As the result that the linking group comprises an oxyalkylene group, the rinsing properties of engraving residue after the laser engraving is improved. As the oxyalkylene group, an oxyethylene group is preferable, and a polyoxyethylene chain formed by linking plural oxyethylene groups is more preferable. The total number of oxyethylene groups in the polyoxyethylene chain is preferably 2 to 50, more preferably 3 to 30, and particularly preferably 4 to 15.

Specific examples of silane coupling agent can be applied to the present invention are shown below. Examples thereof include b-(3,4-epoxycyclohexyl)ethyltrimethoxysilane, γ-glycidoxypropyltrimethoxysilane, γ -glycidoxypropyldiethoxysilane, γ-glycidoxypropyltriethoxysilane, *N*-(β-aminoethyl)-γ-aminopropyldimethoxysilane, *N*-(β-aminoethyl)-γ-aminopropyltrimethoxysilane, N-(β-aminoethyl)-γ-aminopropyltriethoxysilane, γ-aminopropyltrimethoxysilane, γ -aminopropyltriethoxysilane, N-phenyl-γ-aminopropyltrimethoxysilane, γ -mercaptopropyltrimethoxysilane, γ-mercaptopropyltriethoxysilane, bis(triethoxysilylpropyl)disulfide, bis(triethoxysifylpropyl)tetrasulfide, 1,4-bis(triethoxysilyl)benzen, bis(triethoxysilyl)ethane, 1,6-bis(trinmethoxysilyl)hexane, 1,8-bis(triethoxysilyl)octane, 1,2-bis(trimethoxysilyl)decane, bis(triethoxysilylpropyl)amine, bis(trimethoxysilylpropyl)urea, γ -chloropropyltrimethoxysilane, γ-ureidopropyltriethoxysilane, and a compound represented the formulae below is also preferable, but the present invention is not limited to these compounds.

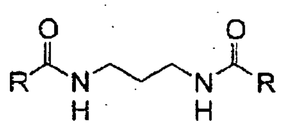

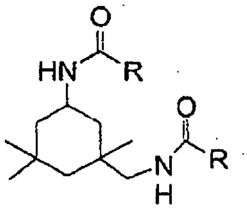

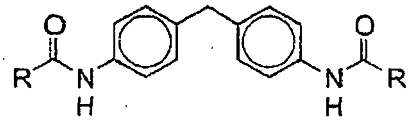

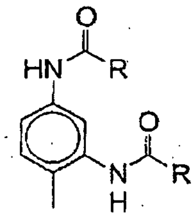

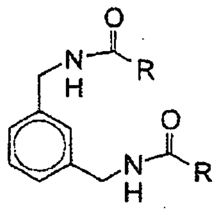

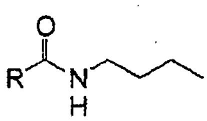

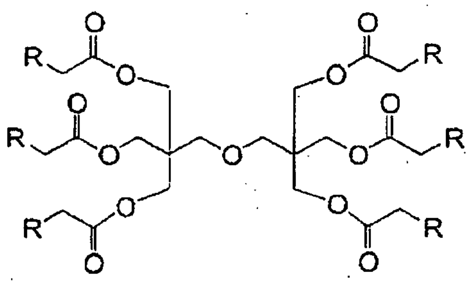

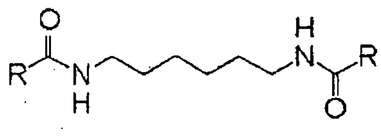

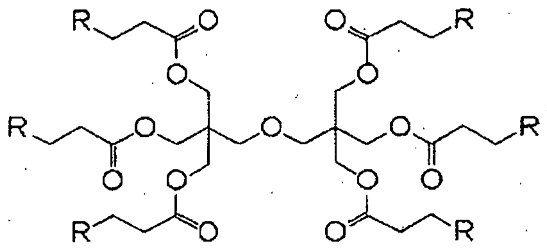

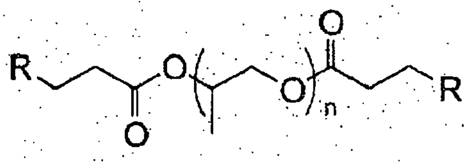

n =1~50

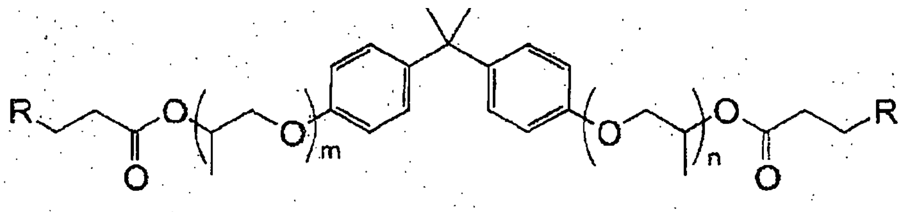

m + n = 2~50

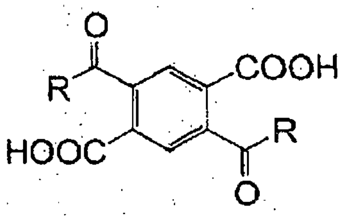

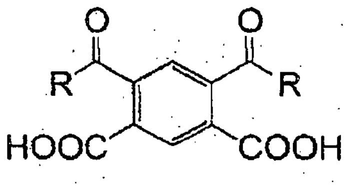

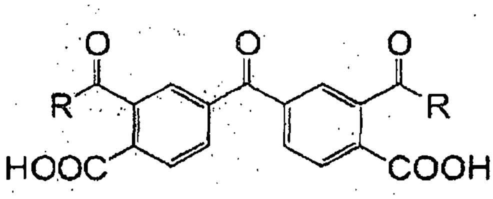

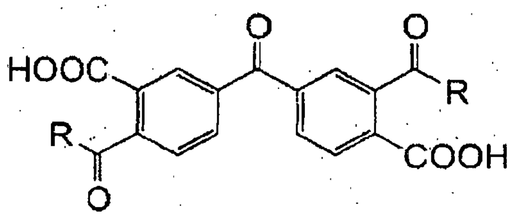

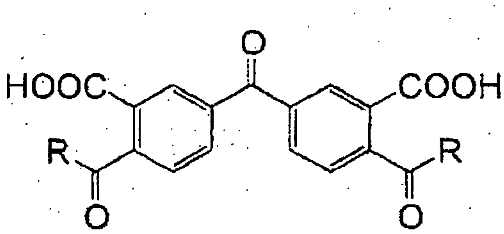

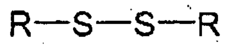

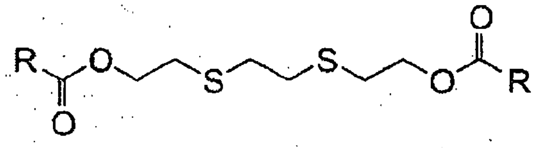

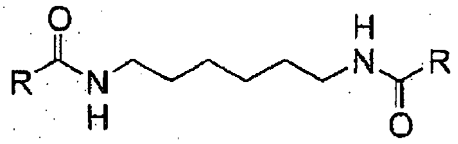

In each of the formulae above, R denotes a partial structure selected from the structures below. When a plurality of Rs and $R^1$s are present in the molecule, they may be identical to or different from each other, and are preferably identical to each other in terms of synthetic suitably. In the chemical structural formulae below, Et denotes an ethyl group and Me denotes a methyl group.

R : 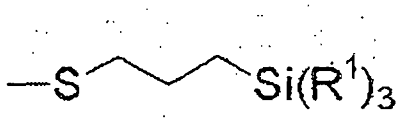 or 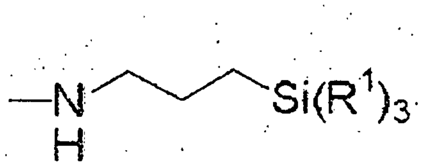

$R^1$ : —OMe , —OEt , 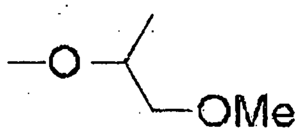

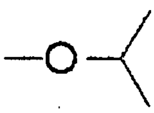 , 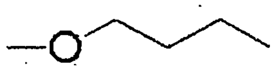 or 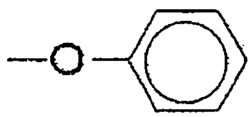

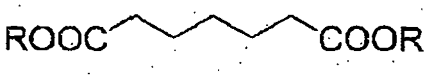 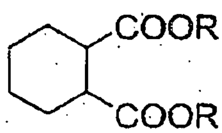

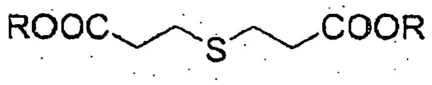

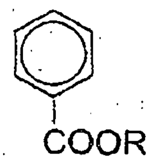

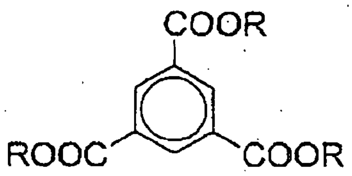

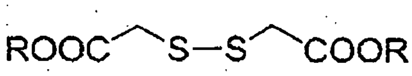

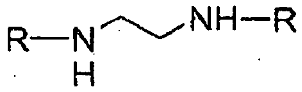

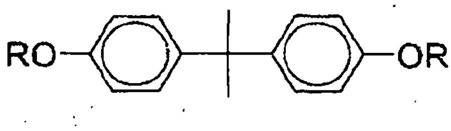

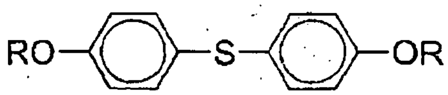

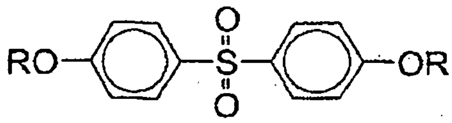

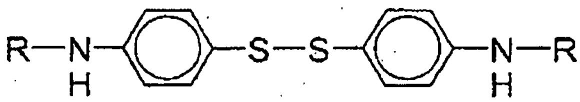

In each of the formulae above, R denotes a partial structure shown below. $R^1$ is the same as defined above. When a plurality of Rs and $R^1$s are present in the molecule, they may be identical to or different from each other, and in terms of synthetic suitability are preferably identical to each other.

R : 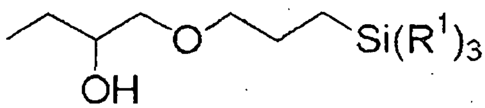

Component F may be obtained by synthesis as appropriate, but use of a commercially available product is preferable in terms of cost. Since Component C corresponds to for example commercially available silane products or silane coupling agents from Shin-Etsu Chemical Co., Ltd., Dow Corning Toray, Momentive Performance Materials Inc., Chisso Corporation, etc., the resin composition of the present invention may employ such a commercially available product by appropriate selection according to the intended application.

As a silane coupling agent in the present invention, other than the above-mentioned compounds, a partial hydrolysis-condensation product obtained using one type of compound having a hydrolyzable silyl group and/or a silanol group or a partial cohydrolysis-condensation product obtained using two or more types may be used. Hereinafter, these compounds may be called 'partial (co)hydrolysis-condensation products'.

Specific examples of such partial (co)hydrolysis condensates include a partial (co)hydrolysis condensate obtained by using, as a precursor, one or more selected from the group of silane compounds consisting of alkoxysilane or acetyloxysilane such as tetramethoxysilane, tetraethoxysilane, methyltrimethoxysilane, methyltriethoxysilane, methyltriisopropoxysilane, methyltriacetoxysilane, methyltris(methoxyethoxy)silane, methyltris(methoxypropoxy)silane, ethyltrimethoxysilane, propyltrimethoxysilane, butyltrimethoxysilane, hexyltrimethoxysilane, octyltrimethoxysilane, decyltrimethoxysilane, cyclohexyltrimethoxysilane, phenyltrimethoxysilane, phenyltriethoxysilane, tolyltrimethoxysilane, chloromethyltrimethoxysilane, γ-chloropropyltrimethoxysilane, 3,3,3-trifluoropropyltrimethoxysilane, cyanoethyltriethoxysilane, γ -glycidoxypropyltrimethoxysilane, γ -glycidoxypropyltriethoxysilane, β-(3,4-epoxycyclohexyl)ethyltrimethoxysilane, γ-aminopropyltrimethoxysilane, γ-aminopropyltriethoxysilane, N-β-(aminoethyl)-γ-aminopropyltrimethoxysilane, N-phenyl-γ-aminopropyltrimethoxysilane, γ-mercaptopropyltrimethoxysilane, dimethyldimethoxysilane, dimethyldiethoxysilane, diethyldimethoxysilane, methylethyldimethoxysilane, methylpropyldimethoxysilane, diphenyldimethoxysilane, diphenyldiethoxysilane, methylphenyldimethoxysilane, γ-chloropropylmethyldimethoxysilane, 3,3,3-trifluoropropylmethyldimethoxysilane, γ -glycidoxypropylmethyldiethoxysilane, γ-aminopropylmethyldiethoxysilane, *N*-β-(aminoethyl)-γ-aminopropylmethyldimethoxysilane and γ-mercaptopropylmethyldiethoxysilane, and acyloxysilane such as ethoxalyloxysilane,

Among these silane compounds as partial (co)hydrolysis-condensation product precursors, from the viewpoint of versatility, cost, and film compatibility, a silane compound having a substituent selected from a methyl group and a phenyl group as a substituent on the silicon is preferable, and specific preferred examples of the precursor include methyltrimethoxysilane, methyltriethoxysilane, phenyltrimethoxysilane, phenyltriethoxysilane, dimethyldimethoxysilane, dimethyldiethoxysilane, diphenyldimethoxysilane, and diphenyldiethoxysilane.

In this case, as a partial (co)hydrolysis-condensation product, it is desirable to use a dimer (2 moles of silane compound is reacted with 1 mole of water to eliminate 2 moles of alcohol, thus giving a disiloxane unit) to 100-mer of the above-mentioned silane compound, preferably a dimer to 50-mer, and yet more preferably a dimer to 30-mer, and it is also possible to use a partial cohydrolysis-condensation product formed using two or more types of silane compounds as starting materials.

As such a partial (co)hydrolysis-condensation product, ones commercially available as silicone alkoxy oligomers may be used (e.g. those from Shin-Etsu Chemical Co., Ltd.) or ones that are produced in accordance with a standard method by reacting a hydrolyzable silane compound with less than an equivalent of hydrolytic water and then removing by-products such as alcohol and hydrochloric acid may be used. When the production employs, for example, an acyloxysilane or an alkoxysilane described above as a hydrolyzable silane compound starting material, which is a precursor, partial hydrolysis-condensation may be carried out using as a reaction catalyst an acid such as hydrochloric acid or sulfuric acid, an alkali metal or alkaline earth metal hydroxide such as sodium hydroxide or potassium hydroxide, or an alkaline organic material such as triethylamine, and when the production is carried out directly from a chlorosilane, water and alcohol may be reacted using hydrochloric acid by-product as a catalyst.

Preferable examples of Component F include compounds shown below, but the present invention is not limited to these compounds. In the chemical structural formulae below, Et denotes an ethyl group and Me denotes a methyl group.

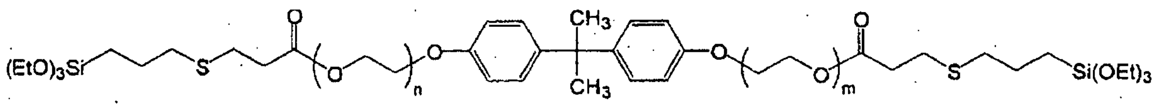
(S-1)

m + n = 4

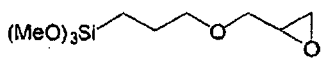
(S-2)

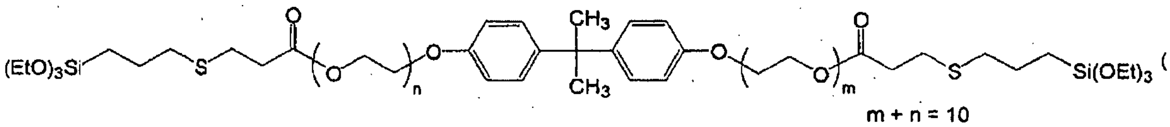
(S-3)

m + n = 10

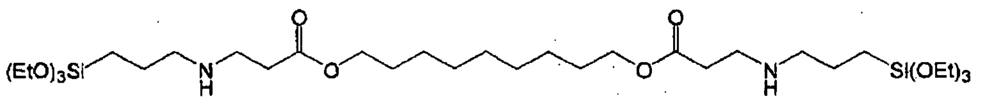
(S-4)

With regard to Component F in the resin composition of the present invention, only one type may be used or two or more types may be used in combination.

The content of Component F contained in the resin composition of the present invention is preferably in the range of 0.1 to 80 wt% on a solids content basis, more preferably in the range of 1 to 50 wt%, and most preferably in the range of 5 to 40 wt%.

<Component G>

Component G is an optional component of the composition for laser engraving of the present invention, and is an ethylenically unsaturated compound having a weight average molecular weight of less than 5,000. Hereinafter, this component will be simply referred to as an "ethylenically unsaturated compound". Component G is preferably a bifunctional or higher-functional ethylenically unsaturated compound (polyfunctional ethylenically unsaturated compound).

The composition of a relief-forming layer for laser engraving in the present invention preferably (Component G) a polyfunctional ethylenically unsaturated compound.

As the polyfunctional ethylenically unsaturated compound, compounds having 2 to 20 terminal ethylenically unsaturated groups are preferable. These compound groups are widely known in the present industrial field, and, in the present invention, these may be used without particular limitation. These have chemical forms such as a monomer, a prepolymer, that is, a dimer, a trimer and an oligomer, or copolymers of monomers, and mixtures thereof.

Examples of compounds from which the ethylenically unsaturated group in the polyfunctional ethylenically unsaturated compound is derived include unsaturated carboxylic acids (such as acrylic acid, methacrylic acid, itaconic acid, crotonic acid, isocrotonic acid and maleic acid), and esters and amides thereof. Preferably esters of an unsaturated carboxylic acid and an aliphatic polyhydric alcoholic compound, or amides of an unsaturated carboxylic acid and an aliphatic polyvalent amine compound are used. Moreover, addition reaction products of unsaturated carboxylic acid esters or amides having a nucleophilic substituent such as a hydroxyl group or an amino group with polyfunctional isocyanates or epoxies, and dehydrating condensation reaction products with a polyfunctional carboxylic acid, etc. are also used favorably. Moreover, addition reaction products of unsaturated carboxylic acid esters or amides having an electrophilic substituent such as an isocyanato group or an epoxy group with monofunctional or polyfunctional alcohols or amines, and substitution reaction products of unsaturated carboxylic acid esters or amides having a leaving group such as a halogen group or a tosyloxy group with monofunctional or polyfunctional alcohols or amines are also favorable. Moreover, as another example, the use of compounds obtained by replacing the unsaturated carboxylic acid with a vinyl compound, an allyl compound, an unsaturated phosphonic acid, styrene or the like is also possible.

From the viewpoint of the reactivity, the ethylenically unsaturated group contained in the polyfunctional ethylenically unsaturated compound is preferably a residue of each of acrylates, methacrylates, vinyl compounds and allyl compounds. From the viewpoint of the printing durability, the polyfunctional ethylenically unsaturated compound more preferably comprises three or more ethylenically unsaturated groups.

Specific examples of ester monomers of an aliphatic polyhydric alcohol compound and an unsaturated carboxylic acid include acrylic acid esters such as ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, a polyester acrylate oligomer, and an ethylene oxide(EO)-modified isocyanurate triacrylate.

Examples of methacrylic acid esters include tetramethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacryloxy-2-hydroxypropoxy)phenyl]dimethylmethane, and bis[p-(methacryloxyethoxy)phenyl]dimethylmethane.

As examples of other esters, aliphatic alcohol-based esters described in JP-B-46-27926, JP-B-51-47334 (JP-B denotes a Japanese examined patent application publication) and JP-A-57-196231, those having an aromatic skeleton described in JP-A-59-5240, JP-A-59-5241, and JP-A-2-226149, those having an amino group described in JP-A-1-165613, etc. may also be used suitably.

The above-mentioned ester monomers may be used as a mixture.

Other examples include polyester acrylates such as those described in JP-A-48-64183, JP-B-49-43191, and JP-B-52-30490, and polyfunctional acrylates and methacrylates such as epoxy acrylates formed by a reaction of an epoxy resin and (meth)acrylic acid. Examples also include specific unsaturated compounds described in JP-B-46-43946, JP-B-1-40337, and JP-B-1-40336, and vinylphosphonic acid-based compounds described in JP-A-2-25493. In some cases, perfluoroalkyl group-comprising structures described in JP-A-61-22048 are suitably used. Moreover, those described as photocuring monomers or oligomers in the Journal of the Adhesion Society of Japan, Vol. 20, No. 7, pp. 300 to 308 (1984) may also be used.

<Component H>

Component H is an optional component of the composition for laser engraving of the present invention, and is a radical polymerization initiator. Component H is added when the composition for laser engraving of the present invention comprises Component G, and a compound which accelerates the addition polymerization of Component G is preferred.
The composition for laser engraving of the present invention preferably comprises (Component H) the radical polymerization initiator in order to accelerate the formation of a crosslinked structure, and more preferably uses (Component G) the polyfunctional ethylenically unsaturated compound and (Component H) the radical polymerization initiator in combination.
As the polymerization initiator, compounds known to those having ordinary skill in the art can be used without limitations. Hereinafter, a radical polymerization initiator, which is a preferred polymerization initiator, will be described in detail, but the present invention is not intended to be limited to these descriptions.
In the present invention, preferred examples of the radical polymerization initiator include (a) an aromatic ketone, (b) an onium salt compound, (c) an organic peroxide, (d) a thio compound, (e) a hexaarylbiimidazole compound, (f) a ketoxime ester compound, (g) a borate compound, (h) an azinium compound, (i) a metallocene compound, (j) an active ester compound, (k) a compound having a carbon halogen bond, and (l) an azo-based compound. Specific examples of (a) to (l) above are listed below, but the present invention should hot be construed as being limited thereto.
In the present invention, from the viewpoint of engraving sensitivity and good relief edge shape being obtained when applied to a relief-forming layer of a relief printing starting plate, an organic peroxide (c) and an azo-based compound (l) are preferable, and an organic peroxide (c) is particularly preferable.
As the aromatic ketone (a), onium salt compound (b), thio compound (d), hexaarylbiimidazole compound (e), ketoxime ester compound (f), borate compound (g), azinium compound (h), metallocene compound (i), active ester compound (j), and compound (k) having a carbon halogen bond, compounds described in paragraphs 0074 to 0118 of JP-A-2008-63554 may preferably be used.
As the thermopolymerization initiator, the organic peroxide (c) and the azo-based compound (l) are preferably used. The compounds shown below are particularly preferable.

(c) Organic peroxide

As the organic peroxide (r-c) that can be used in the present invention, peroxyester-based compounds such as 3,3'4,4'-tetra(*tert*-butylperoxycarbonyl)benzophenone, 3,3'4,4'-tetra(*tert*-amylperoxycarbonyl)benzophenone, 3,3'4,4'-tetra(*tert*-hexylperoxycarbonyl)benzophenone, 3,3'4,4'-tetra(*tert*-octylperoxycarbonyl)benzophenone, 3,3'4,4'-tetra(cumylperoxycarbonyl)benzophenone, 3,3'4,4'-tetra(*p*-isopropylcumylperoxycarbonyl)benzophenone, and di-*tert*-butyl diperoxyisophthalate are preferable.

(l) Azo-based compound

Preferred examples of the azo-based compound (l) that can be used in the present invention as a radical initiator include 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobisisobutyrate, 2,2'-azobis(2-methylpropionamidoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methylpropionamide], and 2,2'-azobis(2,4,4-trimethylpentane).
The resin composition for laser engraving in the present invention preferably further comprises as an optional component (Component I) a photothermal conversion agent which is able to absorb light having a wavelength between 700 to 1,300 nm.
The relief-forming layer in the present invention preferably further comprise a photochemical conversion agent. That is, it is surmised that the photothermal conversion agent in the present invention absorbs laser light and generates heat thus promoting thermal decomposition of a cured material of the resin composition for laser engraving of the present invention. Because of this, it is preferable to select a photothermal conversion agent that absorbs light having the wavelength of the laser that is used for engraving.
When a laser (a YAG laser, a semiconductor laser, a fiber laser, a surface emitting laser, etc.) emitting infrared at a wavelength of 700 to 1,300 nm is used as a light source for laser engraving, it is preferable for the relief forming layer in the present invention to comprise a photothermal conversion agent that can absorb light having a wavelength of 700 to 1,300 nm.
As the photothermal conversion agent in the present invention, various types of dye or pigment are used.
With regard to the photothermal conversion agent, examples of dyes that can be used include commercial dyes

and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, such as azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium dyes, pyrylium salts, and metal thiolate complexes.

In particular, cyanine-based dyes such as heptamethine cyanine dyes, oxonol-based dyes such as pentamethine oxonol dyes, and phthalocyanine-based dyes are preferably used. Examples include dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saisin Ganryo Ouyogijutsu' (Latest Applications of Pigment Technology) (CMC Publishing, 1986), 'Insatsu Inki Gijutsu' (Printing Ink Technology) CMC Publishing, 1984).

Examples of the type of pigment include black pigments, yellow pigments, orange pigments, brown pigments, red pigments, violet pigments, blue pigments, green pigments, fluorescent pigments, metal powder pigments, and other polymer-bonding colorants. Specific examples include insoluble azo pigments, azo lake pigments, condensed azo pigments, chelate azo pigments, phthalocyanine-based pigments, anthraquinone-based pigments, perylene and perinone-based pigments, thioindigo-based pigments, quinacridone-based pigments, dioxazine-based pigments, isoindolinone-based pigments, quinophthalone-based pigments, dyed lake pigments, azine pigments, nitroso pigments, nitro pigments, natural pigments, fluorescent pigments, inorganic pigments, and carbon black. Among these pigments, carbon black is preferable.

Any carbon black, regardless of classification by ASTM and application (e.g. for coloring, for rubber, for dry cell, etc.), may be used as long as dispersibility, etc. in the composition is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products.

In the present invention, it is possible to use carbon black having a relatively low specific surface area and a relatively low dibutyl phthalate (DBP) absorption and also finely divided carbon black having a large specific surface area. Preferred examples of carbon black include Printex (registered trademark) U, Printex (registered trademark) A, and Spezialschwarz (registered trademark) 4 (Degussa).

From the viewpoint of improving engraving sensitivity by efficiently transmitting heat generated by photothermal conversion to the surrounding polymer, etc., the carbon black that can be used in the present invention is preferably a conductive carbon black having a specific surface area of at least 150 $m^2/g$ and a DBP number of at least 150 mL/100 g.

This specific surface area is preferably at least 250 $m^2/g$, and particularly preferably at least 500 $m^2/g$. The DBP number is preferably at least 200 mL/100 g, and particularly preferably at least 250 mL/100 g. The above-mentioned carbon black may be acidic or basic carbon black. The carbon black is preferably basic carbon black. It is of course possible to use a mixture of different carbon blacks.

Suitable conductive carbon black having a specific surface area of up to about 1,500 $m^2/g$ and a DBP number of up to about 550 mL/100 g is commercially available under names such as for example Ketjenblack (registered trademark) EC300J, Ketjenblack (registered trademark) EC600J (Akzo), Printex (registered trademark) XE (Degussa), Black Pearls (registered trademark) 2000 (Cabot), and Ketjen Black (Lion Corporation).

When carbon black is used as the photothermal conversion agent, thermal crosslinking is more preferable in point of the curability of the film, instead of the photo crosslinking using UV light etc., and, by the combination with (c) the organic peroxide being (Component H) the polymerization initiator, which is the aforementioned preferable component for use in combination, the engraving sensitivity becomes extremely high, more preferably.

As the most preferable embodiment of the present invention, as described above, an embodiment, in which (Component C) a binder polymer, furthermore in combination, (c) an organic peroxide as (Component H) a polymerization initiator and carbon black being (Component I) a photothermal conversion agent are used in combination, can be cited.

The content of the photothermal conversion agent in the resin composition for laser engraving in the present invention largely depends on the size of the molecular extinction coefficient characteristic to the molecule, and is preferably 0.01 to 20 wt% relative to the total weight of the solids content of the resin composition, more preferably 0.05 to 10 wt%, and yet more preferably 0.1 to 5 wt%.

(Component J) Alcohol exchange reaction catalyst

The resin composition in the present invention preferably further comprises (Component J) an alcohol exchange reaction catalyst. Component J is preferably used together with Component F.

The alcohol exchange reaction catalyst is a compound that can promote a reaction between a hydrolyzable silyl group and/or a silanol group in Component F and hydroxyl group, and examples thereof preferably include an acidic

or basic catalyst and a metal complex catalyst.

<Metal complex catalyst>

The metal complex catalyst that can be used as an alcohol exchange reaction catalyst in the present invention is preferably constituted from a metal element selected from Groups 2, 4, 5, and 13 of the periodic table and an oxo or hydroxy oxygen compound selected from β-diketones, ketoesters, hydroxycarboxylic acids and esters thereof, amino alcohols, and enolic active hydrogen compounds.

Furthermore, among the constituent metal elements, a Group 2 element such as Mg, Ca, Sr, or Ba, a Group 4 element such as Ti or Zr, a Group 5 element such as V, Nb, or Ta, and a Group 13 element such as Al or Ga are preferable, and they form a complex having an excellent catalytic effect. Among them, a complex obtained from Zr, Al, or Ti is excellent and preferable, ethyl orthotitanate, etc. is more preferable.

In the present invention, examples of the oxo or hydroxy oxygen-comprising compound constituting a ligand of the above-mentioned metal complex include β -diketones such as acetylacetone (2,4-pentanedione) and 2,4-heptanedione, ketoesters such as methyl acetoacetate, ethyl acetoacetate, and butyl acetoacetate, hydroxycarboxylic acids and esters thereof such as lactic acid, methyl lactate, salicylic acid, ethyl salicylate, phenyl salicylate, malic acid, tartaric acid, and methyl tartarate, ketoalcohols such as 4-hydroxy-4-methyl-2-pentanone, 4-hydroxy-2-pentanone, 4-hydroxy-4-methyl-2-pentanone, and 4-hydroxy-2-heptanone, amino alcohols such as monoethanolamine, N,N-dimethylethanolamine, N-methylmonoethanolamine, diethanolamine, and triethanolamine, enolic active compounds such as methylolmelamine, methylolurea, methylolacrylamide, and diethyl malonate ester, and compounds having a substituent on the methyl group, methylene group, or carbonyl carbon of acetylacetone.

A preferred ligand is an acetylacetone derivative, and the acetylacetone derivative in the present invention means a compound having a substituent on the methyl group, methylene group, or carbonyl carbon of acetylacetone. The substituent with which the methyl group of acetylacetone is substituted is a straight-chain or branched alkyl group, acyl group, hydroxyalkyl group, carboxyalkyl group, alkoxy group, or alkoxyalkyl group that all have 1 to 3 carbon atoms, the substituent with which the methylene carbon of acetylacetone is substituted is a carboxy group or a straight-chain or branched carboxyalkyl group or hydroxyalkyl group having 1 to 3 carbon atoms, and the substituent with which the carbonyl carbon of acetylacetone is substituted is an alkyl group having 1 to 3 carbon atoms, and in this case the carbonyl oxygen turns into a hydroxy group by addition of a hydrogen atom.

Specific preferred examples of the acetylacetone derivative include acetylacetone, ethylcarbonylacetone, *n*-propylcarbonylacetone, *i*-propylcarbonylacetone, diacetylacetone, 1-acetyl-1-propionylacetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol, and among them acetylacetone and diacetylacetone are preferable. The complex of the acetylacetone derivative and the metal element is a mononuclear complex in which 1 to 4 molecules of acetylacetone derivative coordinate to one metal element, and when the number of coordinatable sites of the metal element is larger than the total number of coordinatable bond sites of the acetylacetone derivative, a ligand that is usually used in a normal complex, such as a water molecule, a halide ion, a nitro group, or an ammonio group may coordinate thereto.

Preferred examples of the metal complex include a tris(acetylacetonato)aluminum complex salt, a di(acetylacetonato)aluminum-aqua complex salt, a mono(acetylacetonato)aluminum-chloro complex salt, a di(diacetylacetonato)aluminum complex salt, ethyl acetoacetate aluminum diisopropylate, aluminum tris(ethyl acetoacetate), cyclic aluminum oxide isopropylate, a tris(acetylacetonato)barium complex salt, a di(acetylacetonato)titanium complex salt, a tris(acetylacetonato)titanium complex salt, a di-*i*-propoxy-bis(acetylacetonato)titanium complex salt, zirconium tris(ethyl acetoacetate), and a zirconium tris(benzoic acid) complex salt. They are excellent in terms of stability in an aqueous coating solution and an effect in promoting gelling in a sol-gel reaction when thermally drying, and among them ethyl acetoacetate aluminum diisopropylate, aluminum tris(ethyl acetoacetate), a di(acetylacetonato)titanium complex salt, and zirconium tris(ethyl acetoacetate) are particularly preferable.

The composition of the present invention may use only one kind of (Component J) an alcohol exchange reaction catalyst, or may use two or more kinds in combination.

As Component J, an acidic catalyst or a basic catalyst, and a metal complex catalyst are used, and an acidic catalyst or a basic catalyst is preferred.

As the acidic catalyst or basic catalyst, an acid or a basic compound may be used as it is, or such a compound in the state of being dissolved in a solvent such as water or an organic solvent (hereinafter, respectively referred to as an acidic catalyst and a basic catalyst) is used. The concentration used when the catalyst is dissolved in a solvent is not particularly limited, and may be appropriately selected in accordance with the characteristics of the acid or the basic compound used, the desired content of the catalyst, or the like.

An acidic or a basic catalyst is not particularly limited. Examples of the acidic catalyst include a hydrogen halide such as hydrochloric acid, nitric acid, sulfuric acid, sulfurous acid, hydrogen sulfide, perchloric acid, hydrogen peroxide,

carbonic acid, a carboxylic acid such as formic acid or acetic acid, a carboxylic acid in which R of the structural formula RCOOH is substituted with another element or substituent, a sulfonic acid such as benzenesulfonic acid, phosphoric acid, a heteropoly acid, and an inorganic solid acid.

Examples of the basic catalyst include an ammoniacal base such as aqueous ammonia, an amine such as ethylamine or aniline, an alkali metal hydroxide, an alkali metal alkoxide, an alkaline earth oxide, a quaternary ammonium salt compound, and a quaternary phosphonium salt compound.

Among the acidic catalysts or basic catalysts described above, from the viewpoint of rapidly carrying out the alcohol exchange reaction, methanesulfonic acid, *p*-toluenesulfonic acid, pyridinium *p*-toluenesulfonate, dodecyl benzenesulfonic acid, phosphoric acid, phosphonic acid, acetic acid, 1,8-diazabicyclo[5.4.0]undec-7-ene, 1,5-diazabicyclo[4.3.0]non-5-ene, and 1,1,3,3-tetramethylguanidine are preferred, and methanesulfonic acid, *p*-toluenesulfonic acid, phosphoric acid, 1,8-diazabicyclo[5.4.0]undec-7-ene, and 1,5-diazabicyclo[4.3.0]non-5-ene (DBU) are particularly preferred.

The content of (Component J) an alcohol exchange reaction catalyst in the composition of the present invention is not particularly limited, and may be appropriately selected according to the characteristics of the alcohol exchange reaction catalyst used. The incorporation amount of Component F is preferably 0.01 to 0.1 wt%.

For the composition for laser engraving or the printing plate precursor for laser engraving of the present invention, it is preferable that the composition or printing plate precursor further contain Components B to D in addition to Component A, and it is more preferable that the composition or printing plate precursor further contain Components B to J.

<Solvent>

The composition of the present invention may comprise a solvent.

An aprotic organic solvent which solves Component A, etc. constituting the resin composition is preferably used as a major component when preparing the resin composition for laser engraving of the present invention. More specifically, they are used preferably at a ratio of aprotic organic solvent/protic organic solvent = 100/0 to 50/50 (ratio by weight), more preferably 100/0 to 70/30, and particularly preferably 100/0 to 90/10.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, $\gamma$ -butyrolactone, *N*,*N*-dimethylacetamide, *N*-methylpyrrolidone, and dimethyl sulfoxide.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.

Among them propyleneglycolmonomethylether acetate is preferable.

When the sequestering agent according to the present invention has an ester structure or an amide structure, attention is paid to the fact that satisfactory flexibility is imparted to the relief-forming layer formed from the composition, and a deprotected sequestering agent works as a plasticizer. As the flexibility of the final film is higher, the ink transferability at the time of printing are superior, and therefore, the sequestering agent is effective in an improvement of the ink transferability. It is speculated that when the sequestering agent has an ester structure or an amide structure, the sequestering agent serves as a satisfactory flexibility imparting agent (plasticizer) because these functional groups have high affinity with the urethane group of the polyurethane structure.

The composition for laser engraving of the present invention does not particularly require the incorporation of a plasticizer. This is because the sequestering agent produced by the deprotection reaction of Component A functions as a plasticizer. It is also because the carboxylic acid ester or amide produced by deprotection has an action of softening the film formed from the composition for laser engraving, and the carboxylic acid ester or amide also has satisfactory compatibility with the binder polymer.

(Other additives)

The resin composition for laser engraving of the present invention preferably comprises, as an additive for improving engraving sensitivity, nitrocellulose or a high thermal conductivity material. Since nitrocellulose is a self-reactive compound, it generates heat during laser engraving, thus assisting thermal decomposition of a coexisting binder polymer such as a hydrophilic polymer. It is surmised that as a result, the engraving sensitivity improves. A high thermal conductivity material is added for the purpose of assisting heat transfer, and examples of thermally conductive materials include inorganic compounds such as metal particles and organic compounds such as a conductive polymer. As the metal particles, fine gold particles, fine silver particles, and fine copper particles having a particle diameter of on the order of a micrometer or a few nanometers are preferable. As the conductive polymer, a conjugated polymer is particularly preferable, and specific examples thereof include polyaniline and polythiophene.

Furthermore, when a co-sensitizer is used, the sensitivity at the time of photocuring the composition for laser engraving can be further enhanced.

In addition, it is preferable to add a small amount of a thermal polymerization inhibitor in order to inhibit any unnecessary thermal polymerization of polymerizable compounds during the production or during the storage of the composition.

For the purpose of coloration of the composition for laser engraving, a colorant such as a dye or a pigment may also be added. Thereby, properties such as the visibility of image areas, or the suitability to an image density analyzer can be enhanced.

Known additives such as a filler may also be added in order to improve the properties of a cured film of the composition for laser engraving.

<Composition for laser engraving>

For the composition for laser engraving, Component A and Component B, and appropriate optional components are mixed while stirring, optionally in an appropriate inert solvent, to allow Component A and Component B to react, and a polyurethane is produced. The reaction can be monitored by means of an increase of the viscosity, and is terminated before the system reaches a gel state. In this manner, a composition for laser engraving is obtained. A crosslinkable composition for relief formation is thus obtained.

<Relief-forming layer, relief printing plate precursor>

The relief-forming layer is a layer formed from the resin composition for laser engraving of the present invention by removing solvent, and is preferably crosslinkable.

As an embodiment in which a relief printing plate is prepared using the relief printing plate precursor for laser engraving, an embodiment in which a relief printing plate is prepared by crosslinking a relief-forming layer to thus form a relief printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a relief printing plate having a relief layer with a sharp shape after laser engraving.

The relief-forming layer may be formed by molding the resin composition for laser engraving that has the above-mentioned components for a relief-forming layer into a sheet shape or a sleeve shape. The relief-forming layer is usually provided on/above a support, which is described later, but it may be formed directly on the surface of a member such as a cylinder of equipment for plate producing or printing or may be placed and immobilized thereon, and a support is not always required.

A case in which the relief-forming layer is mainly formed in a sheet shape is explained as an Example below.

<Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), polybutylene terephthalate (PBT), or polyacrylonitrile (PAN)) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

<Adhesive layer>

An adhesive layer may be provided between the relief-forming layer and the support for the purpose of strengthening the adhesion between the two layers. Examples of materials (adhesives) that can be used in the adhesive layer include those described in 'Handbook of Adhesives', Second Edition, Ed by I. Skeist, (1977). <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 μm, and more preferably 50 to 200 μm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main

component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

(Method for producing a relief printing plate)

A method for producing a relief printing plate of the present invention comprises a step of laser engraving a preferably crosslinked relief-forming layer of a relief printing precursor thus to form a relief layer.

Formation of a relief-forming layer in the relief printing plate precursor for laser engraving is not particularly limited, and examples thereof include a method in which a resin composition for laser engraving is prepared, solvent is removed from this coating solution composition for laser engraving, and it is then melt-extruded onto a support. Alternatively, a method may be employed in which a resin composition for laser engraving is cast onto a support, and this is dried in an oven to thus remove solvent from the resin composition.

Among them, the process for producing a relief printing plate precursor for laser engraving of the present invention is preferably a production process comprising a layer formation step of forming a relief-forming layer from the resin composition for laser engraving of the present invention and a crosslinking step of crosslinking the relief-forming layer by means of heat and/or light to thus obtain a relief printing plate precursor having a crosslinked relief-forming layer.

Subsequently, as necessary, a protection film may be laminated on the relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

<Layer formation step>

The process for producing the relief printing plate for laser engraving of the present invention preferably comprises a layer formation step of forming a relief-forming layer from the resin composition for laser engraving of the present invention.

Preferred examples of a method for forming the relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove solvent.

The composition for laser engraving can be prepared by, for example, dissolving component A and Component B, and one or more of Component C to Component G as optional components in an appropriate solvent, and subsequently heating the solution as necessary to appropriately allow a polyurethane formation reaction to proceed.

The thickness of the (crosslinked) relief-forming layer in the relief printing plate precursor for laser engraving is preferably 0.05 to 10 mm before and after crosslinking, more preferably 0.05 to 7 mm, and yet more preferably 0.05 to 3 mm.

<Crosslinking step>

The process for producing a relief printing plate precursor for laser engraving of the present invention is preferably a production process comprising a crosslinking step of crosslinking the relief-forming layer by means of light and/or heat to thus obtain a relief printing plate precursor having a crosslinked relief-forming layer.

mWhen the relief-forming layer comprises a photopolymerization initiator, the relief-forming layer may be crosslinked by irradiating the relief-forming layer with actinic radiation that triggers the photopolymerization initiator.

It is preferable to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need be irradiated with light, but when the support is a transparent film through which actinic radiation passes, it is preferable to further irradiate the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

When the relief-forming layer comprises a thermopolymerization initiator, the relief-forming layer may be crosslinked by heating the relief printing plate precursor for laser engraving (step of crosslinking by means of heat). As heating means, there can be cited a method in which a printing plate precursor is heated in a hot air oven or a far-infrared oven for a predetermined period of time and a method in which it is put into contact with a heated roller for a predetermined period of time.

As a method for crosslinking the relief-forming layer, from the viewpoint of the relief-forming layer being uniformly curable (crosslinkable) from the surface into the interior, crosslinking by heat is preferable.

Due to the relief-forming layer being crosslinked, firstly, a relief formed after laser engraving becomes sharp and, secondly, tackiness of engraving residue formed when laser engraving is suppressed. If an uncrosslinked relief-forming layer is laser-engraved, residual heat transmitted to an area around a laser-irradiated part easily causes melting or deformation of a part that is not targeted, and a sharp relief layer cannot be obtained in some cases. Furthermore, in terms of the general properties of a material, the lower the molecular weight, the more easily it becomes a liquid rather than a solid, that is, there is a tendency for tackiness to be stronger. Engraving residue formed when engraving a relief-forming layer tends to have higher tackiness the more that low-molecular-weight materials are used. Since a polymerizable compound, which is a low-molecular-weight material, becomes a polymer by crosslinking, the tackiness of the engraving residue formed tends to decrease.

When the crosslinking step is a step of carrying out crosslinking by heat, although there is the advantage that particularly expensive equipment is not needed, since a printing plate precursor reaches a high temperature, it is necessary to carefully select the starting materials used while taking into consideration the possibility that a thermoplastic polymer, which becomes soft at high temperature, will deform during heating, etc.

During thermal crosslinking, it is preferable to add a thermopolymerization initiator. As the thermopolymerization initiator, a commercial thermopolymerization initiator for free radical polymerization may be used. Examples of such a thermopolymerization initiator include an appropriate peroxide, hydroperoxide, and azo group-comprising compound. A representative vulcanizing agent may also be used for crosslinking. Thermal crosslinking may also be carried out by adding a heat-curable resin such as for example an epoxy resin as a crosslinking component to a layer.

(Relief printing plate and process for making same)

The process for making a relief printing plate of the present invention preferably comprises a layer formation step of forming a relief-forming layer from the resin composition for laser engraving of the present invention, a crosslinking step of crosslinking the relief-forming layer by means of heat and/or light to thus obtain a relief printing plate precursor having a crosslinked relief-forming layer, and an engraving step of laser-engraving the relief printing plate precursor having the crosslinked relief-forming layer, and more preferably comprises a layer formation step of forming a relief-forming layer from the resin composition for laser engraving of the present invention, a crosslinking step of crosslinking the relief-forming layer by means of heat to thus obtain a relief printing plate precursor having a crosslinked relief-forming layer, and an engraving step of laser-engraving the relief printing plate precursor having the crosslinked relief-forming layer.

(Engraving step)

The process for making a relief printing plate of the present invention preferably comprises an engraving step of laser-engraving the relief printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at

higher sensitivity, thus giving a relief layer having a sharp image.

As the infrared laser used in the engraving step, from the viewpoint of productivity, cost, etc., a carbon dioxide laser (a $CO_2$ laser) or a semiconductor laser is preferable. In particular, a fiber-coupled semiconductor infrared laser (FC-LD) is preferably used. In general, compared with a $CO_2$ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is futher preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a relief printing plate employing the relief printing plate precursor of the present invention, those described in detail in JP-A-2009-172658 and JP-A-2009-214334 can be cited.

The process for making a relief printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid comprising water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid comprising water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin relief printing plate precursor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 6, more preferably at least 6.5, and yet more preferably at least 11. The pH of the rinsing liquid is preferably no greater than 14, more preferably no greater than 13.5, yet more preferably no greater than 13.1. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

## EXAMPLES

### <Production Example>

### (Production of Binder Polymer (C-1))

In a 2-L separable flask equipped with a thermometer, a stirrer and a circulator, 1,318 g of trade name "PCDL T4672" (number average molecular weight 2,059, OH value 54.5), which is a polycarbonate diol manufactured by Asahi Kasei Corp., and 76.8 g of tolylene diisocyanate were added, and the mixture was allowed to react for about 3 hours under heating at 80°C. Subsequently, 52.6 g of 2-methacryloyloxy isocyanate was added thereto, and the mixture was allowed to react for another about 3 hours. Thus, Resin (C-1) having methacryl groups at the ends (about 1.7 intramolecular polymerizable unsaturated groups per molecule in average) and having a weight average molecular weight of

about 20,000 was produced. This resin was syrup-like at 20°C, and when an external force was applied, the resin was fluidized, but did not recover the original shape even if the external force was removed.

Furthermore, the details of the binder polymers used as Component B or Component C, which were used in the following Examples, are as follows.

#3000-2: Denka Butyral #3000-2 (manufactured by Denki Kagaku Kogyo K.K., polyvinyl butyral derivative Mw = 90,000)

Acrylic Resin 1: Cyclohexyl methacrylate/2-hydroxyethyl methacrylate 70/30 (mol%) copolymer, Mw = 50,000

Acrylic Resin 2: Cyclohexyl methacrylate/allyl methacrylate 70/30 (mol%) copolymer, Mw = 60,000

Urethane Resin 1: Tolylene diisocyanate/polypropylene glycol (average molecular weight 2,000) 50/50 (mol%) Mw = 90,000

Embodiments of the present invention will be described in detail below with reference to Production Examples, Examples and Comparative Examples. In the following, the units "parts" and "percent (%)" mean "parts by weight" and "wt%", respectively. Meanwhile, the embodiments of the present invention are not intended to be limited to these Examples.

Unless stated otherwise, the weight average molecular weight (Mw) of a polymer in the Examples indicates the value measured by a GPC method.

Furthermore, relief printing plate precursors for laser engraving of the following Examples all had a residual amount of blocked isocyanate groups of 15% or less.

As Component A according to the invention, following blocked isocyanate compounds A-2 to A-9 were used. As Component A for comparison, Reference Compound RA-1, and comparative compounds CA-1 and CA-2 were used. The combinations of isocyanate compounds before protection and sequestering agents are shown below. Meanwhile, the isocyanate groups are completely protected

| | NCO compound | Sequestering agent |
|---|---|---|
| RA-1 | 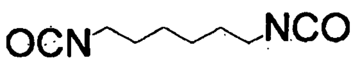 | 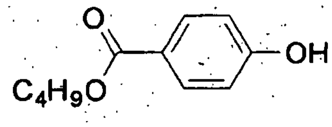 |
| A-2 | 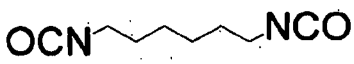 | 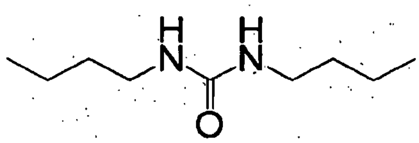 |
| A-3 | 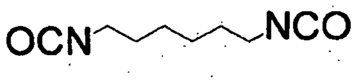 | 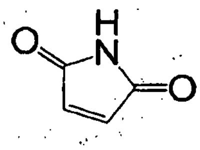 |
| A-4 | 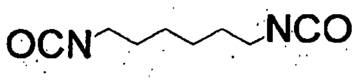 | 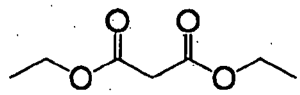 |
| A-5 | 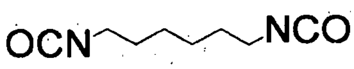 | 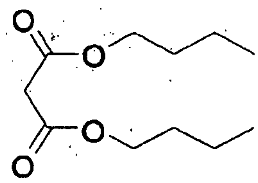 |

(continued)

| | NCO compound | Sequestering agent |
|---|---|---|
| A-6 | 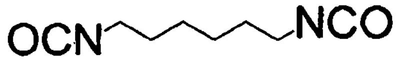 | 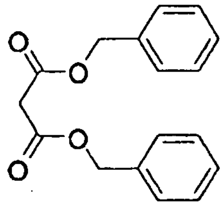 |
| A-7 | 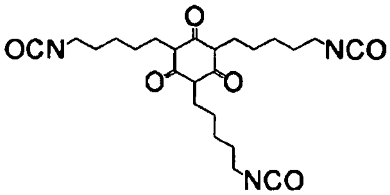 | 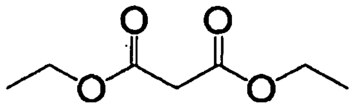 |
| A-8 | 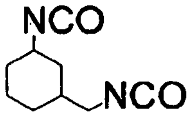 | 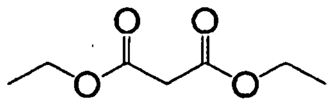 |
| A-9 | 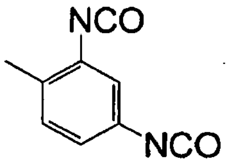 | 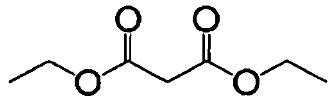 |
| CA-1 | 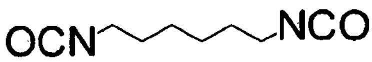 | 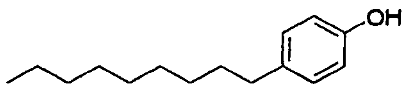 |
| CA-2 | 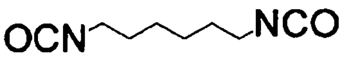 | 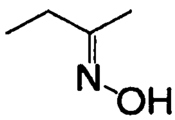 |

(Reference Example 1)

1. Preparation of composition for laser engraving

In a three-necked flask equipped with a stirring blade and a cooling tube, 48.8 g of (A-1) as (Component A) a blocked isocyanate compound; 5.5 g of glycerin as (Component B) a compound having at least two or more OH groups; 2 g of trade name "Sylosphere C-1504" manufactured by Fuji Silysia Chemical, Ltd. (porous spherical silica, number average particle size 4.5 μm, specific surface area 520 $m^2/g$, average pore diameter 12 nm, fine pore volume 1.5 ml/g, ignition loss 2.5 wt%, oil absorption 290 ml/100 g, degree of the sphericity measured by scanning electron microscopic observation is 0.9 or higher for almost all particles) as (Component D) silica particles; 0.05 g of dibutyltin dilaurate as (Component E) a reaction accelerator; 2 g of Ketjen Black EC600JD (carbon black, manufactured by Lion Corp.) as (Component I) a photothermal conversion agent; and 15 g of propylene glycol monomethyl ether acetate were introduced, and the mixture was stirred for 30 minutes at room temperature and then stirred for 30 minutes at 70°C. At this time, no gel-like components were generated, and no increase in the viscosity was seen. Through the above operation, flowable Coating Liquid 1 for a crosslinkable relief-forming layer (composition for laser engraving) was obtained.

2. Production of relief printing plate precursor for laser engraving

A spacer (frame) having a predetermined thickness was provided on a PET substrate, and Coating Liquid 1 for a crosslinkable relief-forming layer obtained as described above was gently flow cast to the extent that the coating liquid would not flow out over the spacer (frame). The coating liquid was dried for 2 hours in an oven at 150°C, and a relief-forming layer having a thickness of approximately 1 mm was provided. Thus, Relief Printing Plate Precursor 1 for laser engraving was produced.

3. Production of relief printing plate

Relief Printing Plate Precursor 1 for laser engraving obtained as described above was subjected to engraving by means of the following two kinds of lasers.
As a carbon dioxide laser engraving machine, engraving by laser light irradiation was carried out using a high-resolution $CO_2$ laser marker ML-9100 series (manufactured by Keyence Corp.). A protective film was peeled off from the relief printing plate precursor for laser engraving 1, and then a solid area which measured 1 cm on each side was raster-engraved with the carbon dioxide laser engraving machine under the conditions of output power: 12 W, head speed: 200 mm/second, and pitch setup: 2,400 DPI.
As a semiconductor laser engraving machine, a laser recording apparatus equipped with a fiber-coupled semiconductor laser (FC-LD) SDL-6390 (manufactured by JDSU Corp., wavelength 915 nm) having a maximum output power of 8.0 W was used. A solid area which measured 1 cm on each side was raster-engraved with the semiconductor laser engraving machine under the conditions of laser output power: 7.5 W, head speed: 409 mm/second, and pitch setup: 2,400 DPI.
Meanwhile, also for following Examples 2 to 26 and Comparative Examples 1 to 9, relief printing plate precursors for laser engraving were produced for each, and then subsequently, two relief printing plates were produced using the two kinds of lasers as described in Section 3.

(Reference Example 2)

1. Preparation of composition for laser engraving

The preparation was carried out in the same manner as in Reference Example 1, except that 10 g of (G-1) as (Component G) a compound having a weight average molecular weight of less than 5,000 and having a polymerizable unsaturated group; 0.5 g of *t*-butyl peroxybenzoate (trade name: Perbutyl Z manufactured by NOF Corp.) as (Component H) a radical polymerization initiator; and 0.01 g of 4-OHTEMPO as a polymerization inhibitor were added, and thus Coating Liquid 2 for crosslinkable relief-forming layer (composition for laser engraving) was prepared.

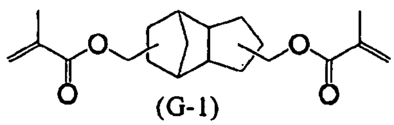

(G-1)

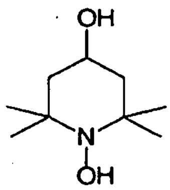

(4-OHTEMPO)

2. Production of relief printing plate precursor for laser engraving

The production was carried out in the same manner as in Reference Example 1, and thus Relief Printing Plate Precursor 2 for laser engraving was produced.
Laser engraving was carried out in the same manner as in Reference Example 1, and thus two relief printing plates were produced.

(Reference Example 3)

1. Preparation of composition for laser engraving

Coating Liquid 3 for a crosslinkable relief-forming layer (composition for laser engraving) was prepared in the same manner as in Reference Example 2, except that "#3000-2" was used as (Component B2) a binder polymer having a weight average molecular weight of at least 5,000 but less than 500,000, and 50 g of a 30 wt% solution of this polymer in propylene glycol monomethyl ether acetate was added.

2. Production of relief printing plate precursor for laser engraving

Relief Printing Plate Precursor 3 for laser engraving was produced in the same manner as in Reference Example 1.

Laser engraving was carried out in the same manner as in Reference Example 1, and thus two relief printing plates were produced.

(Reference Example 4)

1. Preparation of composition for laser engraving

Production was carried out in the same manner as in Reference Example 3, except that 15 g of (F-1) as (Component F) a compound having at least one of a hydrolyzable silyl group and a silanol group and having a weight average molecular weight of less than 5,000; and 0.2 g of diazabicycloundecene (DBU) as (Component J) alcohol exchange reaction catalyst were added. Thus, Coating Liquid 4 for a crosslinkable relief-forming layer (composition for laser engraving) was prepared.

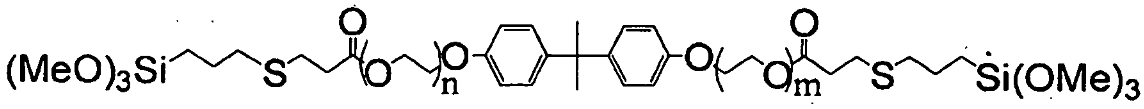

m+n=10

(F-1)

2. Production of relief printing plate precursor for laser engraving

Relief Printing Plate Precursor 4 for laser engraving was produced in the same manner as in Reference Example 1.

Laser engraving was carried out in the same manner as in Reference Example 1, and thus two relief printing plates were produced.

(Example 5)

1. Preparation of composition for laser engraving

Coating Liquid 5 for a crosslinkable relief-forming layer (composition for laser engraving) was prepared in the same manner as in Reference Example 1, except that 44.8 g of (A-2) was used as (Component A) the blocked isocyanate compound.

2. Production of relief printing plate precursor for laser engraving

A spacer (frame) having a predetermined thickness was provided on a PET substrate, and Coating Liquid 5 for a crosslinkable relief-forming layer obtained as described above was gently flow cast to the extent that the coating liquid would not flow out over the spacer (frame). The coating liquid was dried for 2 hours in an oven at 120°C, and a relief-forming layer having a thickness of approximately 1 mm was provided. Thus, Relief Printing Plate Precursor 5 for laser engraving was produced.

Laser engraving was carried out in the same manner as in Reference Example 1, and two relief printing plates were produced.

(Example 6)

1. Preparation of composition for laser engraving

Coating Liquid 6 for a crosslinkable relief-forming layer (composition for laser engraving) was prepared in the same manner as in Reference Example 2, except that 44.8 g of (A-2) was used as (Component A) the blocked isocyanate compound.

2. Production of relief printing plate precursor for laser engraving

A spacer (frame) having a predetermined thickness was provided on a PET substrate, and Coating Liquid 6 for a crosslinkable relief-forming layer obtained as described above was gently flow cast to the extent that the coating liquid would not flow out over the spacer (frame). The coating liquid was dried for 2 hours in an oven at 120°C, and a relief-forming layer having a thickness of approximately 1 mm was provided. Thus, Relief Printing Plate Precursor 6 for laser engraving was produced.

Laser engraving was carried out in the same manner as in Reference Example 1, and two relief printing plates were produced.

(Example 7)

1. Preparation of composition for laser engraving

Coating Liquid 7 for a crosslinkable relief-forming layer (composition for laser engraving) was prepared in the same manner as in Reference Example 3, except that 44.8 g of (A-2) was used as (Component A) the blocked isocyanate compound.

2. Production of relief printing plate precursor for laser engraving

A spacer (frame) having a predetermined thickness was provided on a PET substrate, and Coating Liquid 7 for a crosslinkable relief-forming layer obtained as described above was gently flow cast to the extent that the coating liquid would not flow out over the spacer (frame). The coating liquid was dried for 2 hours in an oven at 120°C, and a relief-forming layer having a thickness of approximately 1 mm was provided. Thus, Relief Printing Plate Precursor 7 for laser engraving was produced.

Laser engraving was carried out in the same manner as in Reference Example 1, and two relief printing plates were produced.

(Example 8)

1. Preparation of composition for laser engraving

Coating Liquid 8 for a crosslinkable relief-forming layer (composition for laser engraving) was prepared in the same manner as in Reference Example 4, except that 44.8 g of (A-2) was used as (Component A) the blocked isocyanate compound.

2. Production of relief printing plate precursor for laser engraving

A spacer (frame) having a predetermined thickness was provided on a PET substrate, and Coating Liquid 8 for a crosslinkable relief-forming layer obtained as described above was gently flow cast to the extent that the coating liquid would not flow out over the spacer (frame). The coating liquid was dried for 2 hours in an oven at 120°C, and a relief-forming layer having a thickness of approximately 1 mm was provided. Thus, Relief Printing Plate Precursor 8 for laser engraving was produced.

Laser engraving was carried out in the same manner as in Reference Example 1, and two relief printing plates were produced.

(Example 9)

1. Preparation of composition for laser engraving

Coating Liquid 9 for a crosslinkable relief-forming layer (composition for laser engraving) was prepared in the same manner as in Reference Example 4, except that 31.7 g of (A-3) was used as (Component A) the compound having at least two or more blocked isocyanate groups.

2. Production of relief printing plate precursor for laser engraving

A spacer (frame) having a predetermined thickness was provided on a PET substrate, and Coating Liquid 9 for a crosslinkable relief-forming layer obtained as described above was gently flow cast to the extent that the coating liquid would not flow out over the spacer (frame). The coating liquid was dried for 2 hours in an oven at 120°C, and a relief-forming layer having a thickness of approximately 1 mm was provided. Thus, Relief Printing Plate Precursor 9 for laser engraving was produced.

Laser engraving was carried out in the same manner as in Reference Example 1, and two relief printing plates were produced.

(Example 10)

1. Preparation of composition for laser engraving

Coating Liquid 10 for a crosslinkable relief-forming layer (composition for laser engraving) was prepared in the same manner as in Example 1, except that 43 g of (A-4) was used as (Component A) the blocked isocyanate compound.

2. Production of relief printing plate precursor for laser engraving

A spacer (frame) having a predetermined thickness was provided on a PET substrate, and Coating Liquid 10 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 10 for laser engraving was produced.

Laser engraving was carried out in the same manner as in Reference Example 1, and two relief printing plates were produced.

(Example 11)

1. Preparation of composition for laser engraving

Coating Liquid 11 for a crosslinkable relief-forming layer (composition for laser engraving) was prepared in the same manner as in Reference Example 2, except that 43 g of (A-4) was used as (Component A) the blocked isocyanate compound.

2. Production of relief printing plate precursor for laser engraving

A spacer (frame) having a predetermined thickness was provided on a PET substrate, and Coating Liquid 11 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 11 for laser engraving was produced.

Laser engraving was carried out in the same manner as in Reference Example 1, and two relief printing plates were produced.

(Example 12)

1. Preparation of composition for laser engraving

Coating Liquid 12 for a crosslinkable relief-forming layer (composition for laser engraving) was prepared in the

same manner as in Reference Example 3, except that 43 g of (A-4) was used as (Component A) the blocked isocyanate compound.

2. Production of relief printing plate precursor for laser engraving

A spacer (frame) having a predetermined thickness was provided on a PET substrate, and Coating Liquid 12 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 12 for laser engraving was produced.
Laser engraving was carried out in the same manner as in Reference Example 1, and two relief printing plates were produced.

(Example 13)

1. Preparation of composition for laser engraving

Coating Liquid 13 for a crosslinkable relief-forming layer (composition for laser engraving) was prepared in the same manner as in Reference Example 4, except that 43 g of (A-4) was used as (Component A) the blocked isocyanate compound.

2. Production of relief printing plate precursor for laser engraving

A spacer (frame) having a predetermined thickness was provided on a PET substrate, and Coating Liquid 13 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 13 for laser engraving was produced.
Laser engraving was carried out in the same manner as in Reference Example 1, and two relief printing plates were produced.

(Example 14)

1. Preparation of composition for laser engraving

Coating Liquid 14 for a crosslinkable relief-forming layer (composition for laser engraving) was prepared in the same manner as in Example 13, except that 56.3 g of (A-5) was used as (Component A) the blocked isocyanate compound.

2. Production of relief printing plate precursor for laser engraving

Relief Printing Plate Precursor 14 for laser engraving was produced in the same manner as in Example 13 using Coating Liquid 14 for a crosslinkable relief-forming layer (composition for laser engraving) obtained as described above.
Laser engraving was carried out in the same manner as in Reference Example 1, and two relief printing plates were produced.

(Example 15)

1. Preparation of composition for laser engraving

Coating Liquid 15 for a crosslinkable relief-forming layer (composition for laser engraving) was prepared in the same manner as in Example 13, except that 69 g of (A-6) was used as (Component A) the blocked isocyanate compound.

2. Production of relief printing plate precursor for laser engraving

Relief Printing Plate Precursor 15 for laser engraving was produced in the same manner as in Example 13 using Coating Liquid 15 for a crosslinkable relief-forming layer (composition for laser engraving) obtained as described above.

(Example 16)

1. Preparation of composition for laser engraving

Coating Liquid 16 for a crosslinkable relief-forming layer (composition for laser engraving) was prepared in the same manner as in Example 13, except that "#3000-2" was not used as (Component B2) the binder polymer having a weight average molecular weight of at least 5,000 but less than 500,000, and 50 g of a 30 wt% solution of (C1) in propylene glycol monomethyl ether acetate was added as (Component C) the binder polymer.
Laser engraving was carried out in the same manner as in Reference Example 1, and two relief printing plates were produced.

(Example 17)

1. Preparation of composition for laser engraving

Coating Liquid 17 for a crosslinkable relief-forming layer (composition for laser engraving) was prepared in the same manner as in Example 13, except that 50 g of a 30 wt% solution of (Acrylic Resin 1) in propylene glycol monomethyl ether acetate was addled instead of "#3000-2" as (Component B2) the binder polymer having a weight average molecular weight of at least 5,000 but less than 500,000.

2. Production of relief printing plate precursor for laser engraving

Relief Printing Plate Precursor 17 for laser engraving was produced in the same manner as in Example 13 using Coating Liquid 17 for a crosslinkable relief-forming layer (composition for laser engraving) obtained as described above.
Laser engraving was carried out in the same manner as in Reference Example 1, and two relief printing plates were produced.

(Example 18)

1. Preparation of composition for laser engraving

Coating Liquid 18 for a crosslinkable relief-forming layer (composition for laser engraving) was prepared in the same manner as in Example 13, except that "#3000-2" was not used as (Component B2) the binder polymer having a weight average molecular weight of at least 5,000 but less than 500,000, and 50 g of a 30 wt% solution of (Acrylic Resin 2) in propylene glycol monomethyl ether acetate was added as (Component C) the binder polymer.

2. Production of relief printing plate precursor for laser engraving

Relief Printing Plate Precursor 18 for laser engraving was produced in the same manner as in Example 13 using Coating Liquid 18 for a crosslinkable relief-forming layer (composition for laser engraving) obtained as described above.
Laser engraving was carried out in the same manner as in Reference Example 1, and two relief printing plates were produced.

(Example 19)

1. Preparation of composition for laser engraving

Coating Liquid 19 for a crosslinkable relief-forming layer (composition for laser engraving) was prepared in the same manner as in Example 13, except that "#3000-2" was not used as (Component B2) the binder polymer having a weight average molecular weight of at least 5,000 but less than 500,000, and 50 g of a 30 wt% solution of (Urethane Resin 1) in propylene glycol monomethyl ether acetate was added as (Component C) the binder polymer.

2. Production of relief printing plate precursor for laser engraving

Relief Printing Plate Precursor 19 for laser engraving was produced in the same manner as in Example 13 using Coating Liquid 19 for a crosslinkable relief-forming layer (composition for laser engraving) obtained as described

above.

Laser engraving was carried out in the same manner as in Reference Example 1, and two relief printing plates were produced.

(Example 20)

1. Preparation of composition for laser engraving

Coating Liquid 20 for a crosslinkable relief-forming layer (composition for laser engraving) was prepared in the same manner as in Reference Example 1, except that 15 g of (A-7) was added as (Component A) the compound having at least two or more blocked isocyanate groups, and 75 g of trade name "PCDL T4672" (number average molecular weight 2059, OH value 54.5), which is a polycarbonate diol manufactured by Asahi Kasei Corp., was added as (Component B) the compound having at least two or more OH groups.

2. Production of relief printing plate precursor for laser engraving

A spacer (frame) having a predetermined thickness was provided on a PET substrate, and Coating Liquid 20 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 20 for laser engraving was produced.

Laser engraving was carried out in the same manner as in Reference Example 1, and two relief printing plates were produced.

(Example 21)

1. Preparation of composition for laser engraving

Coating Liquid 21 for a crosslinkable relief-forming layer (composition for laser engraving) was prepared in the same manner as in Example 13, except that 50 g of Block Isocyanate product number "7990" manufactured by Baxenden Chemicals, Ltd. was used as (Component A) the blocked isocyanate compound.

2. Production of relief printing plate precursor for laser engraving

A spacer (frame) having a predetermined thickness was provided on a PET substrate, and Coating Liquid 21 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 21 for laser engraving was produced.

Laser engraving was carried out in the same manner as in Reference Example 1, and two relief printing plates were produced.

(Example 22)

1. Preparation of composition for laser engraving

Coating Liquid 22 for.a crosslinkable relief-forming layer (composition for laser engraving) was prepared in the same manner as in Example 13, except that 45 g of (A-8) was used as (Component A) the blocked isocyanate compound.

2. Production of relief printing plate precursor for laser engraving

A spacer (frame) having a predetermined thickness was provided on a PET substrate, and Coating Liquid 22 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 22 for laser engraving was produced.

Laser engraving was carried out in the same manner as in Reference Example 1, and two relief printing plates were produced.

(Example 23)

1. Preparation of composition for laser engraving

Coating Liquid 23 for a crosslinkable relief-forming layer (composition for laser engraving) Was prepared in the same manner as in Example 13, except that 45 g of (A-9) was used as (Component A) the blocked isocyanate compound.

2. Production of relief printing plate precursor for laser engraving

A spacer (frame) having a predetermined thickness was provided on a PET substrate, and Coating Liquid 23 for a crosslinkable relief-forming layer obtained as described above was gently flow cast to the extent that the coating liquid would not flow out over the spacer (frame). The coating liquid was dried for 2 hours in an oven at 100°C, and a relief forming layer having a thickness of approximately 1 mm was provided. Thus, Relief Printing Plate Precursor 23 for laser engraving was produced.
Laser engraving was carried out in the same manner as in Reference Example 1, and two relief printing plates were produced. '

(Example 24)

1. Preparation of composition for laser engraving

Coating Liquid 24 for a crosslinkable relief-forming layer (composition for laser engraving) was prepared in the same manner as in Example 13, except that 15 g of (A-7) was used as (Component A) the blocked isocyanate compound, and 50 g of polyethylene glycol PEG 1400 (molecular weight about 1,400) was used as (Component B) the polyol compound.

2. Production of relief printing plate precursor for laser engraving

A spacer (frame) having a predetermined thickness was provided on a PET substrate, and Coating Liquid 24 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 24 for laser engraving was produced.
Laser engraving was carried out in the same manner as in Reference Example 1, and two relief printing plates were produced.

(Example 25)

1. Preparation of composition for laser engraving

Coating Liquid 25 for a crosslinkable relief-forming layer (composition for laser engraving) was prepared in the same manner as in Example 13, except that 15 g of (A-7) was used as (Component A) the blocked isocyanate compound, and 25 g of polyethylene glycol PEG 700 (molecular weight about 700) was used as (Component B) the polyol compound.

2. Production of relief printing plate precursor for laser engraving

A spacer (frame) having a predetermined thickness was provided on a PET substrate, and Coating Liquid 25 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 25 for laser engraving was produced.
Laser engraving was carried out in the same manner as in Reference Example 1, and two relief printing plates were produced.

(Example 26)

1. Preparation of composition for laser engraving

Coating Liquid 26 for a crosslinkable relief-forming layer (composition for laser engraving) was prepared in the same manner as in Example 13, except that 15 g of (A-7) was used as (Component A) the blocked isocyanate compound, and 4 g of diethylene glycol DEG was used as (Component B) the polyol compound.

2. Production of relief printing plate precursor for laser engraving

A spacer (frame) having a predetermined thickness was provided on a PET substrate, and Coating Liquid 26 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor 26 for laser engraving was produced.

Laser engraving was carried out in the same manner as in Reference Example 1, and two relief printing plates were produced.

(Comparative Example 1)

1. Preparation of composition for laser engraving

Coating Liquid CP1 for a crosslinkable relief-forming layer (composition for laser engraving) was prepared in the same manner as in Example 13, except that 15 g of hexamethylene diisocyanate (HMDI) was used instead of (Component A), and the coating liquid was stirred for 30 minutes at 70°C. At this time, the solution turned into a gel, and a relief printing plate precursor for laser engraving could not be produced. Therefore, a dilution of CP1 was prepared again by adding 20 g of propylene glycol monomethyl ether acetate, and the dilution was stirred for 30 minutes at 25°C. Thus, Coating Liquid CP1 for a crosslinkable relief-forming layer (composition for laser engraving) was prepared.

2. Production of relief printing plate precursor for laser engraving

A spacer (frame) having a predetermined thickness was provided on a PET substrate, and Coating Liquid CP1 for crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP1 for laser engraving was produced.

Laser engraving was carried out in the same manner as in Reference Example 1, and two relief printing plates were produced.

(Comparative Example 2)

1. Preparation of composition for laser engraving

Coating Liquid CP2 for a crosslinkable relief-forming layer (composition for laser engraving) was prepared in the same manner as in Comparative Example 1, except that 15 g of isophorone diisocyanate (IPDI) was used instead of (Component A), and the coating liquid was stirred for 30 minutes at 70°C. At this time, the solution turned into a gel, and a relief printing plate precursor for laser engraving could not be produced. Therefore, a dilution of CP2 was prepared again by adding 20 g of propylene glycol monomethyl ether acetate, and the dilution was stirred for 30 minutes at 25°C. Thus, Coating Liquid CP2 for a crosslinkable relief-forming layer (composition for laser engraving) was prepared.

2. Production of relief printing plate precursor for laser engraving

A spacer (frame) having a predetermined thickness was provided on a PET substrate, and Coating Liquid CP2 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP2 for laser engraving was produced.

Laser engraving was carried out in the same manner as in Example 1, and two relief printing plates were

produced.

(Comparative Example 3)

1. Preparation of composition for laser engraving

Coating Liquid CP3 for a crosslinkable relief-forming layer (composition for laser engraving) was prepared in the same manner as in Example 10, except that 43 g of (A-4) was used as (Component A) the blocked isocyanate compound, and 9.5 g of diethylene glycol (DEG) was used as (Component B) the polyol compound.

2. Production of relief printing plate precursor for laser engraving

A spacer (frame) having a predetermined thickness was provided on a PET substrate, and Coating Liquid CP3 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP3 for laser engraving was produced.

Laser engraving was carried out in the same manner as in Example 1, and two relief printing plates were produced.

(Comparative Example 4)

1. Preparation of composition for laser engraving

Coating Liquid CP4 for a crosslinkable relief-forming layer (composition for laser engraving) was prepared in the same manner as in Example 10, except that 15 g of hexamethylene diisocyanate (HMDI) was used instead of (Component A), and 9.5 g of diethylene glycol (DEG) was used as (Component B) the polyol compound. When the coating liquid was stirred for 30 minutes at 70°C, gel-like components were not generated, but the viscosity increased to a large extent before and after heating.

2. Production of relief printing plate precursor for laser engraving

A spacer (frame) having a predetermined thickness was provided on a PET substrate, and Coating Liquid CP4 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP4 for laser engraving was produced.

Laser engraving was carried out in the same manner as in Example 1, and two relief printing plates were produced.

(Comparative Example 5)

1. Preparation of composition for laser engraving

Coating Liquid CP5 for a crosslinkable relief-forming layer (composition for laser engraving) was prepared in the same manner as in Example 1, except that 53.4 g of (CA-1) was used as (Component A) the blocked isocyanate compound.

2. Production of relief printing plate precursor for laser engraving

A spacer (frame) having a predetermined thickness was provided on a PET substrate, and Coating Liquid CP5 for a crosslinkable relief-forming layer obtained as described above was gently flow cast to the extent that the coating liquid would not flow out over the spacer (frame). The coating liquid was dried for 2 hours in an oven at 150°C, and a relief-forming layer having a thickness of approximately 1 mm was provided. Thus, Relief Printing Plate Precursor CP5 for laser engraving was produced.

Laser engraving was carried out in the same manner as in Example 1, and two relief printing plates were produced.

(Comparative Example 6)

1. Preparation of composition for laser engraving

Coating Liquid CP6 for a crosslinkable relief-forming layer (composition for laser engraving) was prepared in the same manner as in Example 1, except that 30 g of (CA-2) was used as (Component A) the blocked isocyanate compound.

2. Production of relief printing plate precursor for laser engraving

A spacer (frame) having a predetermined thickness was provided on a PET substrate, and Coating Liquid CP6 for a crosslinkable relief-forming layer obtained as described above was gently flow cast to the extent that the coating liquid would not flow out over the spacer (frame). The coating liquid was dried for 2 hours in an oven at 150°C, and a relief-forming layer having a thickness of approximately 1 mm was provided. Thus, Relief Printing Plate Precursor CP6 for laser engraving was produced.

Laser engraving was carried out in the same manner as in Example 1, and two relief printing plates were produced.

(Comparative Example 7)

1. Preparation of composition for laser engraving

Coating Liquid CP7 for a crosslinkable relief-forming layer (composition for laser engraving) was prepared in the same manner as in Example 1, except that 15 g of hexamethylene diisocyanate (HMDI) was used instead of (Component A), and the coating liquid was stirred for 30 minutes at 70°C. At this time, the solution turned into a gel, and a relief printing plate precursor for laser engraving could not be produced. Therefore, a dilution of CP7 was prepared again by adding 20 g of propylene glycol monomethyl ether acetate, and the dilution was stirred for 30 minutes at 25°C. Thus, Coating Liquid CP7 for a crosslinkable relief-forming layer (composition for laser engraving) was prepared.

2. Production of relief printing plate precursor for laser engraving

A spacer (frame) having a predetermined thickness was provided on a PET substrate, and Coating Liquid CP7 for crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP7 for laser engraving was produced.

Laser engraving was carried out in the same manner as in Example 1, and two relief printing plates were produced.

(Comparative Example 8)

1. Preparation of composition for laser engraving

Coating Liquid CP8 for a crosslinkable relief-forming layer (composition for laser engraving) was prepared in the same manner as in Reference Example 1, except that 15 g of isophorone diisocyanate (IPDI) was used instead of (Component A), and the coating liquid was stirred for 30 minutes at 70°C. At this time, the solution turned into a gel, and a relief printing plate precursor for laser engraving could not be produced. Therefore, a dilution of CP8 was prepared again by adding 20 g of propylene glycol monomethyl ether acetate, and the dilution was stirred for 30 minutes at 25°C. Thus, Coating Liquid CP8 for a crosslinkable relief-forming layer (composition for laser engraving) was prepared.

2. Production of relief printing plate precursor for laser engraving

A spacer (frame) having a predetermined thickness was provided on a PET substrate, and Coating Liquid CP8 for crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP8 for laser engraving was produced.

Laser engraving was carried out in the same manner as in Reference Example 1, and two relief printing plates

were produced.

(Comparative Example 9)

1. Preparation of composition for laser engraving

Coating Liquid CP9 for a crosslinkable relief-forming layer (composition for laser engraving) was prepared in the same manner as in Reference Example 1, except that 15 g of tolylene diisocyanate (TDI) was used instead of (Component A), and the coating liquid was stirred for 30 minutes at 70°C. At this time, the solution turned into a gel, and a relief printing plate precursor for laser engraving could not be produced. Therefore, a dilution of CP9 was prepared again by adding 20 g of propylene glycol monomethyl ether acetate, and the dilution was stirred for 30 minutes at 25°C. Thus, Coating Liquid CP9 for a crosslinkable relief-forming layer (composition for laser engraving) was prepared.

2. Production of relief printing plate precursor for laser engraving

A spacer (frame) having a predetermined thickness was provided on a PET substrate, and Coating Liquid CP9 for a crosslinkable relief-forming layer obtained as described above was gently flow cast to the extent that the coating liquid would not flow out over the spacer (frame). The coating liquid was dried for 2 hours in an oven at 100°C, and a relief-forming layer having a thickness of approximately 1 mm was provided. Thus, Relief Printing Plate Precursor CP9 for laser engraving was produced.

Laser engraving was carried out in the same manner as in Reference Example 1, and two relief printing plates were produced.

<Evaluation of relief printing plate>

An evaluation of the performance of the relief printing plates was carried out for the following items, and the evaluation results are shown in Table 1.

(1) Coating liquid stability

A coating liquid was heated for 30 minutes at 70°C, and changes in the viscosity before and after heating were measured. If a viscosity increase could not be confirmed by visual inspection, the coating liquid was rated as "good"; if a viscosity increase could be confirmed by visual inspection, the coating liquid was rated as "fair"; and if the coating liquid was almost unflowing or gelled, the coating liquid was rated as "poor".

(2) Engraving depth

"Engraving Depth" of the relief layer which was obtained by laser engraving the relief-forming layer of a relief printing plate precursor was measured as follows. Here, "engraving depth" indicates the difference between the engraved position (height) and the non-engraved position (height) in a case where the cross-section of the relief layer is observed. "Engraving depths" in the present examples were measured by making an observation of the cross-section of the relief layer using an ultra-depth color 3D profile analysis microscope VK9510 (manufactured by Keyence Corporation). A large engraving depth means a high engraving sensitivity. The results are shown in Table 1.

(3) Rinsability

The laser-engraved plate was immersed in an alkali water adjusted to pH 9.8, and the engraved area was rubbed 10 times with a toothbrush (manufactured by Lion Corp., Clinica Toothbrush Flat). Thereafter, the presence or absence of residue on the surface of the relief layer was checked using an optical microscope. A sample without any residue was rated as "excellent" (rank 4), almost no residue was rated as "good" (rank 3) ; a sample with very little residue was rated as "fair" (rank 2); and a sample from which residue was not removed was rated as "poor" (rank 1). The results are shown in Table 1 as corresponding rank.

(4) Printing durability

A relief printing plate thus obtained was mounted in a printing machine (ITM-4 type, manufactured by lyo Kikai Seisakusho Co., Ltd.), and printing was continuously performed using an aqueous ink AQUA SPZ16 RED (manufactured by Toyo Ink Co., Ltd.) as an ink without dilution, and using Full Color Form M 70 (manufactured by Nippon Paper Group,

thickness 100 μm) as a printing paper. A highlight of 1 to 10% was checked from the print product. The time when unprinted halftone dots occurred was regarded as completion of printing, and the length (meters) of paper that had been printed until the completion of printing was taken as the index. A larger value of this index was evaluated to have superior printing durability.

(5) Ink transferability

During the evaluation of printing durability, the degrees of adherence (ink transferability) of ink at a solid area on a print product at paper lengths of 500 m and 1000 m from the initiation of printing were compared by visual inspection.

A print product having a uniform density without unevenness was rated as "excellent" (rank 5); a print product having density unevenness was rated as "poor" (rank 1); and a print product in an intermediate state between "excellent" (rank 5) and "poor" (rank 1) was rated based on five-grade criteria such as "good" (rank 4), "good-fair" (rank 3), and "fair" (rank 2) in order from grade close to "excellent". The results are shown in Table 1 by corresponding rank.

(Table 1)

| | Components | | | | | | Performance evaluation | | | | | |
|---|---|---|---|---|---|---|---|---|---|---|---|---|
| | A | B1 | B2 | C | F | G | Coating liquid stability | Engraving depth (μm) FC-LD | Engraving depth (μm) $CO_2$ Laser | Rinsability | Printing durability (m) | Ink transfer ability |
| Ref. Ex.1 | A-1 | Glycerin | None | None | None | None | Good | 380 | 320 | 2 | 1,200 | 3 |
| Ref. Ex.2 | A-1 | Glycerin | None | None | None | G-1 | Good | 360 | 300 | 3 | 1,250 | 2 |
| Ref. Ex.3 | A-1 | Glycerin | #3000-2 | None | None | G-1 | Good | 365 | 305 | 2 | 1,800 | 2 |
| Ref. Ex.4 | A-1 | Glycerin | #3000-2 | None | F-1 | G-1 | Good | 355 | 295 | 4 | 1,900 | 2 |
| Ex.5 | A-2 | Glycerin | None | None | None | None | Good | 390 | 325 | 2 | 1,300 | 4 |
| Ex.6 | A-2 | Glycerin | None | None | None | G-1 | Good | 365 | 310 | 3 | 1,350 | 3 |
| Ex.7 | A-2 | Glycerin | #3000-2 | None | None | G-1 | Good | 360 | 315 | 2 | 1,950 | 3 |
| Ex.8 | A-2 | Glycerin | #3000-2 | None | F-1 | G-1 | Good | 360 | 300 | 4 | 2,150 | 3 |
| Ex.9 | A-3 | Glycerin | #3000-2 | None | F-1 | G-1 | Good | 350 | 290 | 4 | 2,200 | 3 |
| Ex.10 | A-4 | Glycerin | None | None | None | None | Good | 395 | 330 | 3 | 1,450 | 5 |
| Ex.11 | A-4 | Glycerin | None | None | None | G-1 | Good | 370 | 310 | 3 | 1,600 | 4 |
| Ex.12 | A-4 | Glycerin | #3000-2 | None | None | G-1 | Good | 370 | 305 | 3 | 2,300 | 4 |
| Ex.13 | A-4 | Glycerin | #3000-2 | None | F-1 | G-1 | Good | 365 | 305 | 4 | 2,400 | 5 |
| Ex.14 | A-5 | Glycerin | #3000-2 | None | F-1 | G-1 | Good | 360 | 300 | 4 | 2,300 | 5 |
| Ex.15 | A-6 | Glycerin | #3000-2 | None | F-1 | G-1 | Good | 350 | 290 | 4 | 2,700 | 3 |
| Ex.16 | A-4 | Glycerin | None | C-1 | F-1 | G-1 | Good | 390 | 320 | 4 | 2,000 | 4 |
| Ex.17 | A-4 | Glycerin | Acrylic Resin 1 | None | F-1 | G-1 | Good | 360 | 300 | 4 | 2,300 | 3 |
| Ex.18 | A-4 | Glycerin | None | Acrylic Resin 2 | F-1 | G-1 | Good | 350 | 290 | 4 | 1,950 | 3 |

(continued)

| | Components | | | | | | Performance evaluation | | | | | |
|---|---|---|---|---|---|---|---|---|---|---|---|---|
| | A | B1 | B2 | C | F | G | Coating liquid stability | Engraving depth ($\mu$m) FC-LD | Engraving depth ($\mu$m) $CO_2$ Laser | Rinsability | Printing durability (m) | Ink transfer ability |
| Ex.19 | A-4 | Glycerin | None | Urethane Resin 1 | F-1 | G-1 | Good | 370 | 310 | 2 | 1,900 | 3 |
| Ex.20 | A-7 | PCDL T4672 | None | None | None | None | Good | 390 | 330 | 2 | 1,600 | 4 |
| Ex.21 | 7990 | Glycerin | #3000-2 | None | F-1 | G-1 | Good | 360 | 320 | 4 | 2,200 | 4 |
| Ex.22 | A-8 | Glycerin | #3000-2 | None | F-1 | G-1 | Good | 330 | 270 | 4 | 2,000 | 3 |
| Ex.23 | A-9 | Glycerin | #3000-2 | None | F-1 | G-1 | Good | 300 | 250 | 4 | 1,800 | 2 |
| Ex.24 | A-7 | PEG1400 | #3000-2 | None | F-1 | G-1 | Good | 380 | 320 | 4 | 2,000 | 4 |
| Ex.25 | A-7 | PEG700 | #3000-2 | None | F-1 | G-1 | Good | 350 | 300 | 3 | 1,750 | 3 |
| Ex.26 | A-7 | DEG | #3000-2 | None | F-1 | G-1 | Good | 320 | 280 | 2 | 1,600 | 2 |
| Comp. Ex.1 | HMDI | Glycerin | #3000-2 | None | F-1 | G-1 | Poor | 320 | 290 | 3 | 1,850 | 1 |
| Comp. Ex.2 | IPDI | Glycerin | #3000-2 | None | F-1 | G-1 | Poor | 310 | 280 | 3 | 1,700 | 1 |
| Comp. Ex. 3 | A-4 | DEG | None | None | None | None | Good | 300 | 250 | 1 | 0 | 1 |
| Comp. Ex.4 | HMDI | DEG | None | None | None | None | Poor | 300 | 260 | 1 | 0 | 1 |
| Comp. Ex. 5 | CA-1 | Glycerin | None | None | None | None | Good | 350 | 300 | 2 | 1,000 | 1 |
| Comp. Ex. 6 | CA-2 | Glycerin | None | None | None | None | Good | 340 | 300 | 2 | 900 | 1 |
| Comp. Ex. 7 | HMDI | Glycerin | None | None | None | None | Poor | 360 | 310 | 2 | 950 | 1 |
| Comp. Ex. 8 | IPDI | Glycerin | None | None | None | None | Poor | 340 | 290 | 2 | 1,000 | 1 |

(continued)

| | Components | | | | | | Performance evaluation | | | | | |
|---|---|---|---|---|---|---|---|---|---|---|---|---|
| | A | B1 | B2 | C | F | G | Coating liquid stability | Engraving depth ($\mu m$) FC-LD | Engraving depth ($\mu m$) $CO_2$ Laser | Rinsability | Printing durability (m) | Ink transfer ability |
| Comp. Ex.9 | Tolylene diisocyanate | Glycerin | None | None | None | None | Poor | 320 | 270 | 2 | 1,100 | 1 |

## Claims

1. A composition for laser engraving comprising:

   (Component A) a compound comprising two or more blocked isocyanate groups that are protected by a sequestering agent having a carboxylic acid ester bond and/or an amide bond, selected from the group consisting of a urea-based sequestering agent, an active methylene-based sequestering agent such as a diester of malonic acid, an amide-based sequestering agent, and an imide-based sequestering agent; and
   (Component B) a compound having two or more hydroxyl groups, the composition satisfying the relation of Formula (1) with regard to the number of blocked isocyanate groups in one molecule of Component A, $A_I$, and the number of hydroxyl groups in one molecule of Component B, $B_H$.

   $$A_I + B_H > 4 \qquad (1)$$

2. The composition for laser engraving according to claim 1, wherein Component A is protected by a sequestering agent-which is an active methylene-based sequestering agent.

3. The composition for laser engraving according to claims 1 or 2, wherein the sequestering agent is a diester of malonic acid.

4. The composition for laser engraving according to any one of Claims 1 to 3, wherein Component B is (Component B1) a low molecular weight compound having a molecular weight or a weight average molecular weight of less than 5,000, and/or (Component B2) a polymeric compound having a weight average molecular weight of 5,000 or more.

5. The composition for laser engraving according to any one of Claims 1 to 4, wherein the composition further comprises (Component C) a binder polymer having a weight average molecular weight of at least 5,000 but less than 500,000.

6. The composition for laser engraving according to claim 5, wherein Component C is at least one resin selected from the group consisting of a carbonate resin, a urethane resin, an acrylic resin, an ester resin, and a vinyl resin.

7. The composition for laser engraving according to any one of Claims 5 or 6, wherein Component C is a binder polymer having a functional group that is capable of reacting with an isocyanate group and forming a crosslinked structure.

8. The composition for laser engraving according to any one of Claims 1 to 7, wherein the composition further comprises (Component D) silica particles.

9. The composition for laser engraving according to Claim 8, wherein the number average particle size of Component D is at least 0.01 μm but no greater than 10 μm.

10. The composition for laser engraving according to any one of Claims 1 to 9, wherein the composition further comprises (Component E) a compound accelerating a deprotection reaction of a protected isocyanate group, and/or a subsequent urethanization reaction.

11. The composition for laser engraving according to any one of Claims 1 to 10, wherein the composition further comprises (Component F) a compound having at least one of a hydrolyzable silyl group and a silanol group, and having a weight average molecular weight of less than 5,000.

12. The composition for laser engraving according to any one of Claims 1 to 11, wherein the composition further comprises at least one selected from the group consisting of (Component G) an ethylenically unsaturated compound having a weight average molecular weight of less than 5,000, (Component H) a radical polymerization initiator, (Component I) a photothermal conversion agent capable of absorbing light having a wavelength of 700 nm to 1,300 nm and (Component J) an alcohol exchange catalyst.

13. A relief printing plate precursor comprising above a support a relief-forming layer formed by the composition for laser engraving according to any one of Claims 1 to 12.

14. The relief printing plate precursor according to Claim 13, wherein the relief-forming layer is crosslinked by light

and/or heat.

**15.** A method for making a relief printing plate, comprising: a laser-engraving step of a relief-forming layer of a relief printing plate precursor according to Claim 14, thus to form a relief layer.

## Patentansprüche

**1.** Zusammensetzung für die Lasergravur, umfassend:

(Komponente A) eine Verbindung, die zwei oder mehr geblockte Isocyanatgruppen umfasst, die durch ein Sequestriermittel mit einer Carbonsäureesterbindung und/oder einer Amidbindung geschützt sind, ausgewählt aus der Gruppe bestehend aus auf Harnstoff basierenden Sequestriermitteln, auf aktivem Methylen basierenden Sequestriermitteln, wie zum Beispiel einem Diester von Malonsäure, amidbasierten Sequestriermitteln und imidbasierten Sequestriermitteln; und
(Komponente B) eine Verbindung mit zwei oder mehr Hydroxylgruppen,
worin die Zusammensetzung die Beziehung der Formel (1) in Bezug auf die Anzahl der geblockten Isocyanatgruppen in einem Molekül der Komponente A, $A_I$, und die Anzahl der Hydroxylgruppen in einem Molekül der Komponente B, $B_H$, erfüllt.

$$A_I + B_H > 4 \qquad (1)$$

**2.** Zusammensetzung für die Lasergravur gemäß Anspruch 1, worin die Komponente A durch ein Sequestriermittel geschützt ist, welches ein auf aktivem Methylen basierendes Sequestriermittel ist.

**3.** Zusammensetzung für die Lasergravur gemäß den Ansprüchen 1 oder 2, worin das Sequestriermittel ein Diester von Malonsäure ist.

**4.** Zusammensetzung für die Lasergravur gemäß irgendeinem der Ansprüche 1 bis 3, worin die Komponente B eine (Komponente B1) Verbindung mit niedrigem Molekulargewicht mit einem Molekulargewicht oder einem gewichtsgemittelten Molekulargewicht von weniger als 5.000 und/oder eine (Komponente B2) polymere Verbindung mit einem gewichtsgemittelten Molekulargewicht von 5.000 oder mehr ist.

**5.** Zusammensetzung für die Lasergravur gemäß irgendeinem der Ansprüche 1 bis 4, worin die Zusammensetzung ferner (Komponente C) ein Bindepolymer mit einem gewichtsgemittelten Molekulargewicht von mindestens 5.000, jedoch weniger als 500.000 umfasst.

**6.** Zusammensetzung für die Lasergravur gemäß Anspruch 5, worin die Komponente C mindestens ein Harz ist, ausgewählt aus der Gruppe bestehend aus einem Carbonatharz, einem Urethanharz, einem Acrylharz, einem Esterharz und einem Vinylharz.

**7.** Zusammensetzung für die Lasergravur gemäß irgendeinem der Ansprüche 5 oder 6, worin die Komponente C ein Bindepolymer mit einer funktionellen Gruppe ist, die in der Lage ist, mit einer Isocyanatgruppe zu reagieren und eine vernetzte Struktur zu bilden.

**8.** Zusammensetzung für die Lasergravur gemäß irgendeinem der Ansprüche 1 bis 7, worin die Zusammensetzung ferner (Komponente D) Silicapartikel umfasst.

**9.** Zusammensetzung für die Lasergravur gemäß Anspruch 8, worin die zahlengemittelte Partikelgröße der Komponente D mindestens 0,01 μm, jedoch nicht mehr als 10 μm beträgt.

**10.** Zusammensetzung für die Lasergravur gemäß irgendeinem der Ansprüche 1 bis 9, worin die Zusammensetzung ferner (Komponente E) eine Verbindung umfasst, die eine Entschützungsreaktion einer geschützten Isocyanatgruppe und/oder eine anschließende Urethanbildungsreaktion beschleunigt.

**11.** Zusammensetzung für die Lasergravur gemäß irgendeinem der Ansprüche 1 bis 10, worin die Zusammensetzung ferner (Komponente F) eine Verbindung mit mindestens einem von einer hydrolysierbaren Silylgruppe und einer

Silanolgruppe und mit einem gewichtsgemittelten Molekulargewicht von weniger als 5.000 umfasst.

**12.** Zusammensetzung für die Lasergravur gemäß irgendeinem der Ansprüche 1 bis 11, worin die Zusammensetzung ferner mindestens eines umfasst, ausgewählt aus der Gruppe bestehend aus (Komponente G) einer ethylenisch ungesättigten Verbindung mit einem gewichtsgemittelten Molekulargewicht von weniger als 5.000, (Komponente H) einem radikalischen Polymerisationsinitiator, (Komponente I) einem Foto-Wärme-Umwandlungsmittel, welches Licht mit einer Wellenlänge von 700 nm bis 1.300 nm absorbieren kann, und (Komponente J) einem Alkoholaustauschkatalysator.

**13.** Reliefdruckplattenvorläufer, umfassend oberhalb eines Trägers eine reliefbildende Schicht, die durch die Zusammensetzung für die Lasergravur gemäß irgendeinem der Ansprüche 1 bis 12 gebildet ist.

**14.** Reliefdruckplattenvorläufer gemäß Anspruch 13, worin die reliefbildende Schicht durch Licht und/oder Wärme vernetzt ist.

**15.** Verfahren zur Herstellung einer Reliefdruckplatte, umfassend:

einen Lasergravurschritt an einer reliefbildenden Schicht eines Reliefdruckplattenvorläufers gemäß Anspruch 14, um somit eine Reliefschicht zu bilden.

## Revendications

**1.** Une composition pour gravure au laser comprenant:

(Composant A) un composé comprenant deux ou plusieurs groupes isocyanates bloqués qui sont protégés par un agent séquestrant ayant une liaison ester d'acide carboxylique et/ou une liaison amide, choisi parmi le groupe constitué d'un agent séquestrant à base d'urée, un agent séquestrant à base de méthylène actif tel qu'un diester d'acide malonique, un agent séquestrant à base d'amide, et un agent séquestrant à base d'imide; et
(Composant B) un composé ayant deux ou plusieurs groupes hydroxyles, la composition satisfaisant la relation de Formule (1) en ce qui concerne le nombre de groupes isocyanates bloqués dans une molécule de Composant A, $A_I$, et le nombre de groupes hydroxyles dans une molécule de Composant B, $B_H$.

$$A_I + B_H > 4 \qquad (1)$$

**2.** La composition pour gravure au laser selon la Revendication 1, dans laquelle le Composant A est protégé par un agent séquestrant qui est un agent séquestrant à base de méthylène actif.

**3.** La composition pour gravure au laser selon les Revendications 1 ou 2, dans laquelle l'agent séquestrant est un diester d'acide malonique.

**4.** La composition pour gravure au laser selon l'une quelconque des Revendications 1 à 3, dans laquelle le Composant B est (Composant B1) un composé de faible poids moléculaire ayant un poids moléculaire ou un poids moléculaire moyen en poids inférieur à 5,000, et/ou (Composant B2) un composé polymérique ayant un poids moléculaire moyen en poids de 5,000 ou plus.

**5.** La composition pour gravure au laser selon l'une quelconque des Revendications 1 à 4, dans laquelle la composition comprend en outre (Composant C) un polymère liant ayant un poids moléculaire moyen en poids d'au moins 5,000 mais inférieur à 500,000.

**6.** La composition pour gravure au laser selon la Revendication 5, dans laquelle le Composant C est au moins une résine choisie parmi le groupe constitué d'une résine carbonate, une résine uréthane, une résine acrylique, une résine ester, et une résine vinyle.

**7.** La composition pour gravure au laser selon l'une quelconque des Revendications 5 ou 6, dans laquelle le Composant C est un polymère liant ayant un groupe fonctionnel qui est capable de réagir avec un groupe isocyanate et de former une structure réticulée.

**8.** La composition pour gravure au laser selon l'une quelconque des Revendications 1 à 7, dans laquelle la composition comprend en outre (Composant D) des particules de silice.

**9.** La composition pour gravure au laser selon la Revendication 8, dans laquelle la taille de particule moyenne en nombre du Composant D est d'au moins 0,01 μm mais non supérieure à 10 μm.

**10.** La composition pour gravure au laser selon l'une quelconque des Revendications 1 à 9, dans laquelle la composition comprend en outre (Composant E) un composé accélérant une réaction de déprotection d'un groupe isocyanate protégé, et/ou d'une réaction d'uréthanisation ultérieure.

**11.** La composition pour gravure au laser selon l'une quelconque des Revendications 1 à 10, dans laquelle la composition comprend en outre (Composant F) un composé ayant au moins l'un d'un groupe silyle hydrolysable et d'un groupe silanol, et ayant un poids moléculaire moyen en poids inférieur à 5,000.

**12.** La composition pour gravure au laser selon l'une quelconque des Revendications 1 à 11, dans laquelle la composition comprend en outre au moins un choisi parmi le groupe constitué de (Composant G) un composé éthyléniquement insaturé ayant un poids moléculaire moyen en poids inférieur à 5,000, (Composant H) un initiateur de polymérisation radicalaire, (Composant I) un agent de conversion photothermique capable d'absorber de la lumière ayant une longueur d'onde de 700 nm à 1,300 nm et (Composant J) un catalyseur d'échange d'alcool.

**13.** Un précurseur de plaque d'impression en relief comprenant au-dessus d'un support une couche formant le relief formée par la composition pour gravure au laser selon l'une quelconque des Revendications 1 à 12.

**14.** Le précurseur de plaque d'impression en relief selon la Revendication 13, dans lequel la couche formant le relief est réticulée par de la lumière et/ou de la chaleur.

**15.** Un procédé pour produire une plaque d'impression en relief, comprenant: une étape de gravure au laser d'un précurseur de plaque d'impression en relief selon la Revendication 14, formant ainsi une couche en relief.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010100048 A
- JP 2009262370 A
- WO 2005070691 A
- US 2010027867 A
- JP 2004533526 W
- JP 46027926 B
- JP 51047334 B
- JP 57196231 A
- JP 59005240 A
- JP 59005241 A
- JP 2226149 A
- JP 1165613 A
- JP 48064183 A
- JP 49043191 B
- JP 52030490 B
- JP 46043946 B
- JP 1040337 B
- JP 1040336 B
- JP 2025493 A
- JP 61022048 A
- JP 2008063554 A
- JP 2009172658 A
- JP 2009214334 A


### Non-patent literature cited in the description


- *Journal of the Adhesion Society of Japan,* 1984, vol. 20 (7), 300-308
- Senryo Binran. The Society of Synthetic Organic Chemistry, 1970
- Saishin Ganryo Binran. Color Index (C.I.) Handbook. Nippon Ganryo Gijutsu Kyokai, 1977
- Saisin Ganryo Ouyogijutsu. CMC Publishing, 1986
- Insatsu Inki Gijutsu. CMC Publishing, 1984
- Handbook of Adhesives. 1977
- Laser Handbook 2nd Edition. The Laser Society of Japan
- Applied Laser Technology. The Institute of Electronics and Communication Engineers